# EUROPEAN PATENT SPECIFICATION

(11) **EP 4 200 367 B1**
(45) Date of publication and mention of the grant of the patent: **10.07.2024**
(21) Application number: 22793525.1
(22) Date of filing: 21.09.2022
(51) Int. Cl.: C09D 5/00, C09D 5/02

(54) **METHOD OF COATING A SUBSTRATE USING A COATING COMPOSITION COMPRISING A NATURALLY OCCURRING PIGMENT**
VERFAHREN ZUR BESCHICHTUNG EINES SUBSTRATS UNTER VERWENDUNG EINER BESCHICHTUNGSZUSAMMENSETZUNG MIT EINEM NATÜRLICH VORKOMMENDEN PIGMENT
PROCÉDÉ DE REVÊTEMENT D'UN SUBSTRAT À L'AIDE D'UNE COMPOSITION DE REVÊTEMENT COMPRENANT UN PIGMENT NATUREL

(30) Priority: 28.09.2021 EP 21199426
(43) Date of publication of application: 28.06.2023
(73) Proprietor: BASF Coatings GmbH, 48165 Münster (DE)
(72) Inventor: RUEMPEL, Jens-Henning, 48165 Muenster (DE); WINZEN, Simon, 48165 Muenster (DE)
(74) Representative: BASF IP Association
(86) International application number: PCT/EP2022/076173
(87) International publication number: WO 2023/052213

(56) References cited:
- WO-A1-2021/188312
- CN-A- 104 673 064
- US-A1- 2008 176 061
- US-A1- 2009 208 436
- US-A1- 2017 328 005

## Description

The present invention relates to post-coating, in-mold coating and transfer coating methods for producing a coating on a substate by using a liquid coating composition comprising at least one binder and at least one naturally occurring pigment. The present invention further relates to a coating produced by the methods of the invention. The coatings produced in this way not only have a high-level optical appearance and good tactile qualities but also outstanding mechanical resistance, flexibility and weathering stability. The methods can therefore be used to particularly good effect in those sectors imposing equal demands on optical quality, mechanical stability and flexibility of coating layers being present on the substrate. With particular preference, the methods of the invention are appropriate for application in the footwear industry, in particular in the coating of shoe parts, such as soles, composed of flexible foam substrates or in the production of shoe uppers based on leather or synthetic materials.

### State of the art

A wide variety of different substrates with variable layer thicknesses are nowadays coated with coating compositions in a downstream process after production of the substrate to provide visual enhancement of the substrate and/or to provide protection of the substrate from environmental influences, such as soil, stone chipping, weathering, etc..

Such aqueous or solvent-based coating compositions normally contain pigments and/or dyes in a binder matrix which, upon curing, forms the colored coating layer. A huge majority of pigments and/or dyes currently used in such coating compositions are produced from petroleum aromatic chemistry or carbonous feedstock, thus their production contributes significantly to the global warming. Furthermore, the chemical operations necessary to purify intermediates or final products, in order to be commercialized and used, requires lots of energetic resources and also generates undesirable additional by-products.

The negative impact on the environment when using such pigments and/or dyes has stipulated the industry to use pigments and/or dyes coming from more sustainable sources, such as naturally occurring pigments present in dye plants or in the ground. This allows to improve the sustainability of such coated substrates because it significantly reduces the CO₂ generation associated with the petroleum aromatic chemistry or the carbonous feedstock used to produce pigments and/or dyes.

However, the performance of naturally occurring pigments and/or dyes must at least be comparable to pigments and/or dyes prepared by petroleum aromatic chemistry or using carbonous feedstock to ensure that the optical quality of the coated substrate achieves the high demands of industry and customers in this respect. The visual effects achieved with such pigments should be adaptable to the specific needs of the customer and should be obtainable with a wide variety of different substrates.

Moreover, their use in coating compositions should not negatively influence the mechanical properties, such as the adhesion, weathering stability, flexibility, etc., of the resulting coating layer to satisfy existing industry standards. Mechanical stability and flexibility are properties which are absolutely essential for coatings on substrates in a very wide variety of industrial sectors. Mechanical stability - abrasion resistance and stonechip resistance, for example - is highly relevant in any application sector where such external influences are experienced. An acceptable flexibility, though, is very important for the coating of almost any substrate. Flexibility is particularly relevant to the coating of flexible substrates such as foams, textiles, and leather, since the areas of application of such flexible and deformable substrate materials are accompanied by corresponding deformation stresses which also affect the coatings present on the substrate. On rigid substrates likewise, however, such as hard plastics, metal, orwood, the capacity of the coating to remain intact under deformation stress is very important. For instance, very thin substrates composed of inherently rigid materials may likewise be subject to significant deformations in use. Moreover, changes to materials as a result of temperature differences (expansion coefficient) likewise necessitate a commensurate flexibility on the part of the coating being present on the substrate.

WO 2021/188312 A1 discloses a method for manufacturing a coated paperboard including applying a first aqueous barrier coating over a first side of a recycled paperboard substrate. The first aqueous barrier coating is formed from a mixture of a binder, a solvent and a naturally occurring pigment, such as clay.

US 2017/0328005 A1 discloses a method of treating a paperboard including providing a paperboard substrate and applying to a multilayer coating having two or more layers to the first side of the substrate. The multilayer coating is applied by applying a base coating to the paperboard substrate comprising a binder, a solvent and a naturally occurring pigment, such as clay.

CN 104673064 A discloses a method of preparing a coated plastic substrate by spraying a UV curable coating composition to the plastic substrate and curing the applied coating composition. The UV curable coating composition comprises a binder, a solvent and a nano color paste comprising a naturally occurring pigment.

US 2009/0208436 A1 discloses a coating composition comprising a binder, a solvent and a specific pearlescent pigment. Apart from the pearlescent pigment, the composition may comprise further pigments, such as naturally occuring clay minerals. The coating composition may be applied to a textile substrate, or a synthetic fiber based substrate.

US 2008/0176061 A1 discloses a compressible substrate being coated with a waterborne coating composition comprising at least one base neutralized active hydrogen containing film-forming resin, a water dispersible carbodiimide crosslinker and a naturally occurring pigment, such as titanium dioxide. The coated compressible substrate can be obtained by applying the coating composition to the compressible substrate, such as a foam or a synthetic leather, and curing the applied coating composition.

Thus, there is a need for producing coated substrates, for example substrates used in the automotive interior sector, the footwear industry and the furniture industry, using coating compositions containing sustainable pigments, i.e. pigments produced from real dye plants or obtained from natural occurring sources, having a high quality optical appearance, in particular an optical appearance which is comparable to the optical appearance achieved with non-sustainable pigments (i.e. pigments not being prepared from dye plants or obtained from natural occurring sources), as well as excellent mechanical properties, such as adhesion, flexibility, weathering stability and abrasion resistance. The optical properties of the coated substrates should be adaptable to generate colored substrates having the desired optical appearance.

### Object

Accordingly, an object of the present invention is to provide methods for producing a coating using coating composition comprising sustainable pigment(s), i.e. naturally occurring pigment(s), which results in coated substrates having a high optical quality which is moreover adjustable to the specific needs of the respective customer. At the same time, however, the coatings ought to have high mechanical resistance, flexibility and weathering stability. This means in particular that the coating layers produced on the substrates ought to have a high flexibility or elasticity, allowing the use flexible as well as rigid substrates in the coating methods. At the same time, however, the adhesion to various substrates as well as the stability with respect to external mechanical influences, such as abrasion resistance, ought to be outstanding.

### Technical solution

The objects described above are achieved by the subject matter claimed in the claims and also by the preferred embodiments of that subject matter that are described in the description hereinafter.

A first subject of the present invention is therefore a method for producing a coating (B) on a substrate (S).

According to a first alternative, said method comprises a step of producing a colored coating (BC) on the substrate (S) by
(i) applying a coating composition (C1), in particular directly, to at least part of a surface of the substrate (S), wherein the coating composition (C1) comprises at least one binder, at least one naturally occurring pigment having a D₅₀ particle size of 5 to 150 µm and at least one solvent,
(ii) optionally drying the applied coating composition (C1) to form a coating film, and
(iii) curing the applied coating composition (C1) or the formed coating film,
wherein the substrate is selected from plastics substrates, wood, synthetic textiles, synthetic leather goods, filaments made of polymeric materials, and foams.

According to a second alternative, said method comprises
(A) applying a coating composition (C1) to a structured or unstructured matrix or mold, wherein the coating composition (C1) comprises at least one binder, at least one naturally occurring pigment and at least one solvent,
(B-1) curing the applied coating composition (C1), forming a bonding layer on the cured coating composition (C1) not being in contact with the matrix or mold, and applying the bonding layer not being in contact with the cured coating composition (C) onto at least part of the surface of the substrate, or
(B-2) drying the applied coating composition (C1), applying the dried coating composition (C1) not being in contact with the matrix or mold onto a substrate and curing the dried coating composition (C1), and
(C) removing the structured or unstructured matrix or mold from the coated substrate.

According to a third alternative, said method comprises
(a) applying a coating composition (C1) to at least one inner surface of a mold, wherein the coating composition (C1) comprises at least one binder, at least one naturally occurring pigment and at least one solvent,
(b) optionally drying the applied coating composition (C1),
(c) applying a composition (C2) forming the substrate (S) into the mold,
(d) forming the substrate (S) while simultaneously curing the coating composition (C1), and
(e) removing the coated substrate from the mold.

The above-specified methods are hereinafter also referred to as methods of the invention and accordingly are a subject of the present invention. Preferred embodiments of the methods of the invention are apparent from the description hereinafter and also from the dependent claims.

In light of the prior art it was surprising and unforeseeable for the skilled worker that the objects on which the invention is based could be achieved by using naturally occurring pigments in coating compositions used to coat substrates in post-coating, transfer-coating and in-mold coating processes. The use of the naturally occurring pigments allows to tune the appearance of the resulting coating layer by using different amounts or by using the pigments in the form of a pigment paste instead of their use as pigment powder. Moreover, the resulting coating layer has a good appearance, in particular a high hiding power and a uniform appearance not comprising any visual defects, and good mechanical properties, irrespective of the substrate and thus allows to provide aesthetically appealing coated substrates having the required mechanical properties. The obtained coating layers are highly flexible and thus especially suitable for flexible substrates, such as flexible foam substrates used in the footwear industry. Moreover, the sustainable pigments can be incorporated into aqueous as well as solvent-borne coating compositions, thus allowing to tune the coating composition to the respective costumer needs and coating process (i.e. post-mold coating, in-mold coating or transfer coating processes).

A further subject of the present invention is a coating produced by the inventive method as well as a substrate bearing an inventive coating.

### Detailed description

### Definitions:

First of all, a number of terms used in the context of the present invention will be explained.

The grammatical articles "a", "an", and "the", as used herein, are intended to include "at least one" or "one or more", unless otherwise indicated, even if "at least one" or "one or more" is expressly used in certain instances. Thus, these articles are used in this specification to refer to one or more than one (i.e., to "at least one") of the grammatical objects of the article. By way of example, and without limitation, "a component" means one or more components, and thus, possibly, more than one component is contemplated and may be employed or used in an implementation of the described embodiments. Further, the use of a singular noun includes the plural, and the use of a plural noun includes the singular, unless the context of the usage requires otherwise.

As used herein, the term "aqueous coating composition" refers to a coating composition which comprises a water fraction of at least 20 wt.%, preferably at least 25 wt.%, very preferably at least 50 wt.%, based in each case on the total weight of the coating composition. The water fraction is preferably 40 to 60 wt.%, more particularly 45 to 70 wt.%, very preferably 50 to 80 wt.%, based in each case on the total weight of the coating composition. In contrast, the term "solvent-based coating composition" refers to a coating composition with comprises a fraction of organic solvents of at least 20 wt.%, preferably at least 25 wt.%, very preferably at least 45 wt.%, based in each case on the total weight of the coating composition. The organic solvent fraction is preferably 40 to 70 wt.%, more particularly 45 to 65 wt.%, very preferably 50 to 60 wt.%, based in each case on the total weight of the coating composition.

The term "pigment" as used herein refers to powder- or platelet-shaped pigments which, in contrast to dyes, are insoluble in the surrounding medium and are used in coating compositions to achieve a certain visual impression (DIN 55943:1993-11, DIN EN 971-1:1996-09). Such pigments can be divided a) according to their origin into naturally occurring or synthetic pigments; b) according to their chemistry into inorganic and organic pigments; c) according to coloristic effect into white, colored, black and luster pigments. The term pigment does, however, not include functional pigments, such as anti-corrosion pigments and magnetic pigments. In contrast, the term "filler" as used herein refers to a substance in granular or powder form that is insoluble in the surrounding medium and that is used in coating materials to achieve or influence certain physical properties (see DIN 55943: 1993-11, DIN EN 971-1: 1996-09).

The term "pigment paste" as used herein refers to pigment preparations or pigment mixtures in carrier materials (media), in which the pigments are present in a higher concentration than is appropriate for later use. Suitable carrier materials include aqueous or solvent-based binders or binder mixtures, to which wetting agents and sometimes other additives are added. The carrier material should be identical to the medium in which the pigment paste is incorporated or should at least be compatible with it.

As used herein, the term "naturally occurring pigment" refers to pigments sourced from dye plants or other natural resources, such as soil. Said pigments sourced from dye pants or other natural resources may be purified, dried and grinded. However, the term "naturally occurring pigments" does not encompass pigments obtained by modification of naturally occurring pigments, for example by application of further layers to modify the color of the naturally occurring pigment. "Dye plant" refers to a plant comprising a compound which can be used as pigment or dye. The naturally occurring pigment can be obtained from the complete dye plant or from parts thereof, such as the leaves, the roots, fruits, etc.. The pigment obtained from the dye plant or other naturally occurring resources, such as the soil, may be purified, dried and grinded prior to use. The naturally occurring pigment may be used in the form of a powder or in the form of a pigment paste.

As used herein, the term "applying the coating composition directly to the substrate" refers to the application of the coating composition directly on the substrate, i.e. the coating layer produced from the coating composition is in direct contact with the substrate such that no other layer is present between the produced coating layer and the substrate.

As used herein, the term "drying" of the applied coating composition (C1) refers to the evaporation of solvents from the applied coating composition (C1). Drying can be performed at ambient temperature or by use of elevated temperatures. However, the drying does not result in a coating film being ready for use, i.e. a cured coating film as described below, because the coating film is still soft or tacky after drying. Accordingly, "curing" of the applied coating composition (C1) or the coating film resulting from drying the applied coating composition (C1) refers to the conversion of such a composition or film into the ready-to-use state, i.e. into a state in which the substrate provided with the respective coating layer can be transported, stored and used as intended. More particularly, a cured coating layer is no longer soft or tacky, but has been conditioned as a solid coating layer which does not undergo any further significant change in its properties, such as hardness or adhesion to the substrate, even under further exposure to curing conditions. Curing can be performed at higher temperatures and/or for longer times than used for drying of the coating composition (C1).

"Binder" in the context of the present invention and in accordance with DIN EN ISO 4618:2007-03 is the nonvolatile component of a coating composition, without pigments and fillers. Hereinafter, however, the expression is used principally in relation to particular physically and/or chemically curable polymers, examples being polyurethanes, polyesters, polyethers, polyureas, polyacrylates, polysiloxanes and/or copolymers of the stated polymers. The nonvolatile fraction may be determined according to DIN EN ISO 3251: 2018-07 at 130°C for 60 min using a starting weight of 1.0 g.

The term "poly(meth)acrylate" refers both to polyacrylates and to polymethacrylates. Poly(meth)acrylates may therefore be composed of acrylates and/or methacrylates and may comprise further ethylenically unsaturated monomers, such as styrene or acrylic acid, for example.

The measurement methods to be employed in the context of the present invention for determining certain characteristic variables can be found in the Examples section. Unless explicitly indicated otherwise, these measurement methods are to be employed for determining the respective characteristic variable. Where reference is made in the context of the present invention to an official standard without any indication of the official period of validity, the reference is implicitly to that version of the standard that is valid on the filing date, or, in the absence of any valid version at that point in time, to the last valid version.

All film thicknesses reported in the context of the present invention should be understood as dry film thicknesses. It is therefore the thickness of the cured film in each case. Hence, where it is reported that a coating material is applied at a particular film thickness, this means that the coating material is applied in such a way as to result in the stated film thickness after curing.

All temperatures elucidated in the context of the present invention should be understood as the temperature of the room in which the substrate or the coated substrate is located. It does not mean, therefore, that the substrate itself is required to have the temperature in question.

### Inventive methods for producing a coating (B) on a substrate (S):

In the context of the methods of the invention, a coating (B) is produced on a substrate (S). The coating can be produced by three alternative methods, namely a post-coating process in which a coating layer is produced on an already produced substrate, an in-mold coating process, in which the coating (B) is formed during production of the substrate and a transfer coating process, in which a structured and coated substrate is produced by laminating a structured coating layer to an already produced substrate.

### Post-mold coating process:

A first embodiment of the inventive method includes producing a colored coating (BC) on the substrate (S) by
(i) applying a coating composition (C1), in particular directly, to at least part of a surface of the substrate (S), wherein the coating composition (C1) comprises at least one binder, at least one naturally occurring pigment having a D₅₀ particle size of 5 to 150 µm and at least one solvent,
(ii) optionally drying the applied coating composition (C1) to form a coating film, and
(iii) curing the applied coating composition (C1) or the formed coating film,
wherein the substrate is selected from plastics substrates, wood, synthetic textiles, synthetic leather goods, filaments made of polymeric materials, and foams.

Suitable plastic substrates include PVC substrates, PU substrates, PC substrates, PA substrates, TPU substrates. The term "PVC substrate" refers to a substrate mainly comprising PVC, i.e. PVC is contained in the substrate in at least 51 wt.%, based on the total weight of the substrate. The same applies to all further substrates listed. With preference, the substrates consist of the listed compound, i.e. a PVC substrate consists of PVC.

The polymeric material used to make the filaments is preferably selected from TPU, TPA, PA. Such filaments are used in 3D printing processes and may be fused during the 3D printing process to give the desired substrate. The term "substrate selected from filaments" includes the filaments as such as well as substrates made using said filaments, for examples substrates resulting from 3D printing processes using such filaments.

Preference in the context of the first alternative of the inventive method is given to the use of foam substrates, more particularly flexible foam substrates. Suitable foam substrates include all kinds of foam substrates known in this context to the skilled person. In principle, therefore, it is possible to use foams produced from thermosets, thermoplastics, elastomers, or thermoelastics, in other words obtained by corresponding foaming processes from plastics from the stated classes of polymers. In terms of their chemical basis, possible foams include for example, but not exclusively, polystyrenes, polyvinyl chlorides, polyurethanes, polyesters, polyethers, polyetheramides, or polyolefins such as polypropylene, polyethylene, and ethylenevinyl acetate, and also copolymers of the polymers stated. A foam substrate may of course also include a variety of the polymers and copolymers identified.

Preferred foam substrates are flexible foam substrates, especially preferably flexible thermoplastic polyurethane foam substrates. The latter, then, are foam substrates comprising thermoplastic polyurethane as their polymeric plastics matrix. A fundamental quality of such substrates is that they are compressible and elastically deformable.

In the production of the foams, the thermoplastic polyurethane is foamed - that is, converted into a foam - by corresponding foaming processes. Foaming processes are known, and will therefore be presented only briefly. A fundamental principle in each case is that blowing agents and/or gases in solution in the plastic or in a corresponding plastics melt, and formed in crosslinking reactions in the production of corresponding polymeric plastics, are released and so bring about the foaming of the hitherto comparatively dense polymeric plastics. For example, where a low-boiling hydrocarbon is employed as a blowing agent, it vaporizes at elevated temperatures and leads to foaming. Gases such as carbon dioxide or nitrogen as well can also be introduced into the polymer melt at high pressure and/or dissolved therein, as blowing agents. As a result of a later drop in pressure, the melts then foam during the escape of the blowing agent gas.

The foaming may take place, for example, directly during shaping of corresponding plastics substrates, as for example in the course of extrusion or injection molding. The plastics melt, under pressure and with blowing agent added, may be foamed, for example, on emergence from an extruder, by virtue of the pressure drop that then occurs.

It is also possible first to produce pellets of thermoplastic, these pellets containing blowing agent, and then to foam these pellets subsequently in a mold, with the pellets increasing their volume, fusing with one another, and ultimately forming a molding consisting of fused expanded foam beads (also called thermoplastic bead foam). The expandable pellets may be formed, for example, by extrusion and subsequent pelletizing of the polymer strand exiting the extruder. Pelletization is accomplished, for example, via appropriate chopping devices, operating under pressure and temperature conditions such that no expansion occurs. The expansion that then follows and the fusing of the pellets take place in general with the aid of steam at temperatures of around 100°C.

It is also possible to start from plastics pellets that have already been prefoamed when producing thermoplastic bead foams. These are pellets whose individual pellets or polymer beads, in comparison to pellets that have not been prefoamed, already exhibit substantially increased bead sizes with correspondingly reduced densities. The production of beads with controlled prefoaming can be realized by appropriate process control, as described in WO 2013/153190 A1, for example. Hence, on exiting the extruder, extruded polymer strands may be passed into a pelletizing chamber with a stream of liquid, the liquid being under specific pressure and having a specific temperature. Through adaptation of the operating parameters, it is possible to obtain specific expanded or preexpanded thermoplastic pellets, which can be converted into thermoplastic bead foam substrates by subsequent fusing and, optionally, further expansion with - in particular - steam.

Thermoplastic bead foams and corresponding thermoplastic, expandable and/or expanded pellets from which such bead foams may be produced are described in WO 2007/082838 A1, WO 2013/153190 A1 or else WO 2008/125250 A1, for example. Also described therein are operational parameters and starting materials for the production of thermoplastic polyurethanes, and also operational parameters for the production of pellets and bead foams.

Thermoplastic bead foams, especially thermoplastic polyurethane bead foams, can be produced in a very economic way, on an industrial scale in particular and are also particularly advantageous in terms of their profile of properties. Accordingly, thermoplastic bead foams may be produced from thermoplastics, more particularly from expandable or expanded polyurethanes particles, the foams exhibiting outstanding flexibility or elasticity and mechanical stability. In general they are compressible and readily elastically deformable. Accordingly, these foams especially are particularly suitable as foam substrates for applications in sectors such as the footwear industry. Especially preferred substrates, then, are compressible, elastically deformable bead foam substrates which comprise thermoplastic polyurethane as their polymeric plastics matrix. The term "thermoplastic polyurethane bead foam substrate" thus refers to substrates being prepared from thermoplastic polyurethane particles, for example as from expanded or expandable thermoplastic polyurethane particles as previously described.

The substrates, preferably the flexible foam substrates, may intrinsically have any desired shape - that is they may, for example, be simple sheetlike substrates or else more complex shapes such as, in particular, footwear soles such as midsoles.

In one example, the coating composition (C1) is applied by an application device, preferably by an application device suitable for applying liquid coating compositions. Suitable application devices include application devices for dipping, knife coating, spraying, rolling, pad printing or screen printing. Preference is given to employing spray application devices, such as compressed air spray application devices (pneumatic application devices), airless spray application devices, high-speed rotation application devices, electrostatic spray application devices (ESTA devices), optionally in conjunction with hot spray application devices such as hot air (hot spray application devices), pad printing devices or screen printing devices.

Pad printing processes (also called tampography or tampo printing) allow printing a two-dimensional image on a three-dimensional substrate and are basically indirect photogravure processes. This means that the process involves the transfer of an image (for example in the form of a specific image) to substrate using a silicone pad (or an indirect offset/gravure) in a printing machine or print equipment. The image is etched onto a flat printing plate, which is then filled with the coating composition (C1). A smooth surfaced silicone pad (pad printer) with chemical resistances is then used to carry the coating composition (C1) from the plate and transfer it onto the substrate. Silicone is used as the transfer medium as it does not absorb the coating composition into itself. Since silicone can easily adapt to irregularly shaped surfaces, pad printing can be done on almost any kind of substrates, thus allowing to transfer images on complex geometries. Use of pad printing application devices to apply the coating composition (C1) on the substrate in step (i) may be preferred if a particular image is to be printed on the substrate or a particular area is to be coated using the coating composition (C1).

Screen printing process (also called silkscreen printing process or serigraph printing) is a printing technique where a mesh is used to transfer the coating composition (C1) onto a substrate, except in areas made impermeable to the coating composition (C1) by a blocking stencil. There are three common types of screen printing presses: flatbed, cylinder, and rotary. A blade or squeegee is moved across the screen to fill the open mesh apertures with the coating composition (C1), and a reverse stroke then causes the screen to touch the substrate momentarily along a line of contact. This causes the coating composition (C1) to wet the substrate and be pulled out of the mesh apertures as the screen springs back after the blade has passed. One color is printed at a time, so several screens can be used to produce a multi-colored image or design. A screen is made of a piece of mesh stretched over a frame. The mesh could be made of a synthetic polymer, such as nylon or polyester, or stainless steel and a finer and smaller aperture for the mesh would be utilized for a design that requires a higher and more delicate degree of detail. For the mesh to be effective, it must be mounted on a frame and it must be under tension. The frame which holds the mesh could be made of diverse materials, such as wood or aluminum, depending on the sophistication of the machine or the artisan procedure. The blocking stencil is formed by blocking off parts of the screen in the negative image of the design to be printed; that is, the open spaces are where the coating composition (C1) will appear on the substrate. Blocking is facilitated by applying a photosensitive emulsion on the mesh, drying the applied emulsion and selectively exposing the dried emulsion to ultra-violet light, through a film printed with the required design. This hardens the emulsion in the exposed areas but leaves the unexposed parts soft. They are then washed away using a water spray, leaving behind a clean area in the mesh with the identical shape as the desired image, which will allow passage of the coating composition (C1). The screen and frame may be lined with a tape to prevent the coating composition (C1) from reaching the edge of the screen and the frame and any unwanted 'pin-holes' in the hardened emulsion are blocked to avoid leaving unwanted marks of the coating composition (C1) on the substrate.

With very particular preference the coating compositions (C1) are applied by pneumatic spray application devices or electrostatic spray application devices. Application of the coating composition (C1) using said devices may take place in the form of single application or else multiple application, an example being dual application. The application may be performed manually, via semi-automatic spraying equipment or via an automatic spraying device. Such spraying equipment is commonly known in the state of the art and sold, for example, by SATA GmbH & Co. KG or OERTER GmbH & Co. KG. In case the coating composition (C1) is applied by an application device, in particular by a spray application device, preferably, no pre-treatment of the substrate, for example by using coating materials such as adhesion primers, is performed prior to applying the coating composition (C1) to the substrate. Thus, the coating composition (C1) is preferably applying directly onto the substrate, i.e. is in direct contact with the substrate. Even though no pre-treatment of the substrate is performed, an outstanding adhesion is achieved as part of the method of the invention, thus allowing to avoid pre-treatment steps without negatively influence the adhesion of the resulting coating on the substrate. This allows to perform the inventive method more efficiently and faster than processes requiring pre-treatment processes to achieve a sufficient adhesion of the coating to the substrate.

The applied coating composition (C1) is preferably dried a temperature of 15 to 60°C, more preferably of 20 to 30°C, for a duration of 1 to 30 minutes, preferably of 3 to 20 minutes to form a coating film.

The dried coating film or - in case no drying is performed - the applied coating composition (C1) is then cured to produce a colored coating (BC), i.e., a cured colored coating film. Curing takes place preferably at temperatures between 40 and 120°C, more preferably between 60 and 100°C, for a time of, for example, 10 to 60 minutes, preferably 15 to 35 minutes. In this way, decomposition or deformation of preferred substrates, in particular foam substrates, is avoided.

The coated substrate can be coated using commonly known basecoat and clearcoat compositions. However it is preferred if no further coating layer is applied onto the coated substrate.

### Transfer-coating process:

A second embodiment of the inventive method includes producing a colored coating (BC) on the substrate (S) by
(A) applying a coating composition (C1) to a structured or unstructured matrix or mold, wherein the coating composition (C1) comprises at least one binder, at least one naturally occurring pigment and at least one solvent,
(B-1) curing the applied coating composition (C1), forming a bonding layer on the cured coating composition (C1) not being in contact with the matrix or mold and applying the bonding layer not being in contact with the cured coating composition (C1) onto at least part of a surface of the substrate, or
(B-2) drying the applied coating composition (C1), applying the dried coating composition (C1) not being in contact with the matrix or mold onto a substrate and curing the dried coating composition (C1), and
(C) removing the structured or unstructured matrix or mold from the coated substrate.

Suitable methods to prepare structured matrices or molds are well known in the state of the art and are, for example, described in published patent application US 2010/0330333 A1.

Suitable unstructured matrices include films or substrates commonly used as temporary substrates for better handling of the dried or cured coating composition (C1) and the optional bonding layer and which are removed after application of the coating layer (C1) or the bonding layer onto the substrate. The unstructured matrices may be coated with a release agent to facilitate release of the matrices after applying the bonding layer or the dried coating composition (C1) to at least part of the surface of the substrate. The unstructured matrix needs to have proper adhesion to the dried coating composition (C1) so that the dried coating composition (C1) can be deposited on this matrix, and yet can be released from this matrix upon final application onto a substrate surface. If the adhesion of the dried coating composition (C1) to the matrix is defined as F1, the adhesion of bonding layer to a substrate surface as F2 and the adhesion of the cured coating composition (C1) to the bonding layer as F3, the adhesion forces need to satisfy the following relationship: F1 < F2 and F1<F3 to allow removal of the unstructured matrix without removing the coating layer from the substrate. In case no bonding layer is present, the adhesion forces need to satisfy the relationship F1 < F2 to allow removal of the unstructured matrix after curing the coating composition (C1).

The coating composition (C1) can be applied to the structured or unstructured matrix or mold as described previously in relation to the first alternative of the inventive method, for example by using spray application devices.

The applied coating composition (C1) is preferably dried a temperature of 15 to 60°C, more preferably of 20 to 30°C, for a duration of 1 to 30 minutes, preferably of 3 to 20 minutes to form a coating film. Curing of the applied coating composition (C1) can be performed at 60 to 90°C for 1 to 10 minutes, preferably for 1 to 5 minutes.

The bonding layer may comprise an interrupted, i.e., discontinuous, layer, preferably of a cured organic adhesive or a continuous layer of a cured organic adhesive. The discontinues layer may have the form of points, stripes, lattices, rectangles, squares, honeycomb structure, etc..

In one example, the bonding layer may comprise a layer of a cured organic adhesive, for example based on polyvinyl acetate, polyacrylate or in particular polyurethane, preferably based on polyurethanes having a glass transition temperature below 0° C. The organic adhesive may for example be cured thermally, through actinic radiation or by aging. In another example, the bonding layer comprises an adhesive gauze. The bonding layer may comprise a release liner on one side of the bonding layer to facilitate handling of the multilayer product obtained after applying the bonding layer to the cured coating composition (C1). The release liner may be removed prior to application of the bonding layer to the substrate. In one example, the bonding layer may be coated onto the release liner prior to attaching the bonding layer to the cured coating composition (C1). Suitable release liners include polyolefin films, coated papers or films, and coated super calendared papers, for example. Examples of coating materials suitable for release liners include, without limitation, silicone-based and fluorine-based materials, or any other material that has the desired releasing properties, for example, waxes, acrylates, and carbamates.

Application of the bonding layer or the dried coating composition (C1) onto at least part of the surface of the substrate may be performed using pressure and/or heat. If not heat is used, such processes are usually called cold transfer processes while such processes are called hot transfer processes in case heat is used. The heat used during transfer of the bonding layer or dried coating composition (C1) onto at least part of the substrate should be high enough to ensure sufficient adhesion on the substrate surface but low enough to prevent destruction of the substrate or the matrix or mold during the transfer process. Suitable temperatures include the temperatures listed above in relation to the curing of the coating composition (C1). In case the dried coating composition (C1) is applied to the substrate using heat, such heat may simultaneously be used to cure the dried coating composition (C1) on the substrate surface.

The substrate may be a textile, such as a woven or non-woven textile, may be a polymeric material, such as an extruded polymer film or a cured polymer film, or may be a foam. Suitable polymeric materials and foam include the plastic materials and foams described in relation to the first alternative of the inventive method. The substrates may intrinsically have any desired shape - that is they may, for example, be simple sheetlike substrates or else more complex shapes, preferably they are sheetlike substrates.

The coated substrate can be post-coated using commonly known basecoat and clearcoat compositions. However it is preferred if no further coating layer is applied onto the coated substrate obtained after removing the coated substrate from the mold.

### In-mold coating process:

A third embodiment of the inventive method includes producing a colored coating (BC) on the substrate (S) by
(a) applying a coating composition (C1) to at least one inner surface of a mold, wherein the coating composition (C1) comprises at least one binder, at least one naturally occurring pigment and at least one solvent,
(b) optionally drying the applied coating composition (C1),
(c) applying a composition (C2) forming the substrate (S) into the mold,
(d) forming the substrate (S) while simultaneously curing the coating composition (C1), and
(e) removing the coated substrate from the mold.

The inner surface of the mold refers to the surface which comes into contact with the composition forming the substrate (S).

The coating composition (C1) can be applied to the mold surface as previously described and is preferably dried for less than 2 min, more preferably less than 1 min, and very preferably less than 30 s prior to applying the composition forming the substate into the mold. In this case it is advantageous if the molding tool possesses a temperature of 20 to 100°C, more preferably 30 to 90°C, very preferably 40 to 80°C, more particularly 50 to 70°C.

Suitable compositions (C2) for forming the substrate (S) include reactive compositions, i.e. chemically curable compositions, such as crosslinkable foam compositions, or non-crosslinkable foam compositions. The term "non-crosslinkable foam composition" means a foam composition comprising at least one polymer and which does not contain any components that are able to react with each other forming a chemical bond. The compositions can be present in solid form, such as in the form of granules, particles, etc., or in molten form. The compositions may comprise at least one chemical or physical blowing agent which facilitates expanding of the composition. "Expanding" of the non-crosslinkable polymer foam composition is understood herein to mean a volume expansion of the non-crosslinkable foam composition, for example by the use of heat, as compared to the non-expanded non-crosslinkable foam composition present prior to the heat treatment.

Preferred crosslinkable foam compositions (C2) may include externally crosslinking foam compositions and/or internally crosslinking foam compositions, in particular externally crosslinking urethane foam compositions. Suitable externally crosslinking foam compositions include elastomeric foams compositions, more particularly flexible foam compositions, and thermoset foam compositions, more particularly foam compositions resulting in rigid foams. The foams resulting from said compositions may be open-cell, closed-cell or mixed-cell foams. Particularly preferred crosslinkable foam compositions are mixtures polyols and one or more polyisocyanates. The blowing agent added to the polyol component to form the foam is usually water, which reacts with part of the polyisocyanate to form carbon dioxide, the reaction therefore being accompanied by foaming. Soft to elastic foams, especially flexible foams, are obtained using long-chain polyols. If short-chain polyols are used, highly crosslinked structures are formed, leading generally to the formation of rigid foams. The polyols used in producing the polyurethane foam materials preferably comprise polyester polyols, polyether polyols and/or polyester polyether polyols, and are accordingly selected preferably from the group of the aforesaid polyols.

Fibers as well may be admixed to the foam composition. When such compositions are foamed, the products are known as fiber-reinforced foams. Fibers are preferably used when producing rigid foams.

Preferred non-crosslinkable foam compositions (C2) include expanded thermoplastic polyurethane particles, expandable thermoplastic polyurethane particles, non-crosslinkable thermoplastic polyurethane, non-crosslinkable polyvinyl chloride, non-crosslinkable polycarbonate, non-crosslinkable polystyrene, non-crosslinkable polyethylene, non-crosslinkable polypropylene, non-crosslinkable acrylonitrile butadiene styrene, non-crosslinkable polyoxymethylene or non-crosslinkable polytetrafluoroethylene. With particular preference, expanded and expandable thermoplastic polyurethane particles are used as composition (C2).

Suitable expanded and expandable thermoplastic polyurethane particles include the particles described in relation to the first alternative of the inventive method.

The foam composition (C2) may be injected into the closed mold or may be applied in the open mold. In the latter case, the mold is closed prior to forming the substrate (S) while simultaneously curing the coating composition (C1). Prior to applying the composition forming the substrate, further compositions or materials may be inserted into the mold. This allows to produce substrates being prepared from at least two different materials.

Formation of the substrate (S) and curing of the coating composition (C1) preferably takes place for 1 to 30 min, typically 5 to 20 min, at a molding tool temperature in the range from 45 to 75°C, more preferably from 50 to 70°C.

The coated substrate can be post-coated using commonly known basecoat and clearcoat compositions. However it is preferred if no further coating layer is applied onto the coated substrate obtained after removing the coated substrate from the mold.

### Coating Composition (C1) for Inventive Use:

The coating composition (C1) used in the inventive methods comprises at least one binder, at least one naturally occurring pigment and at least one solvent. The coating composition (C1) may further comprise at least one additive as described later on, for example to facilitate leveling of the coating composition on the substrate, dispersion of the pigment in the coating composition, to prevent mildew of the coating composition, to prevent degradation of the naturally occurring pigment, etc.. Moreover, the coating composition (C1) may further comprise at least one crosslinking agent to facilitate crosslinking of the coating composition upon curing.

### Binder:

The first mandatory ingredient of the coating composition (C1) used in the inventive methods is at least one binder. With particular preference, the at least one binder is cured "physically" or "chemically". The term "physically curing" refers to the formation of a cured coating film through release of solvent from the aqueous coating composition, the curing being achieved through interlooping of polymer chains. The use of such binders does therefore render the presence of crosslinking agents superfluous. In contrast, the term "chemical curing" refers to the formation of a cured coating film through chemical crosslinking reactions involving functional groups capable of reacting with each other. This may be accomplished by using a binder having functional groups, such as hydroxyl groups, and a crosslinking agent having complementary functional groups capable of reacting with the functional groups of the binder, such as isocyanate groups. It is, however, also possible to use binders comprising functional groups as well as complementary functional groups, such that the use of a separate crosslinking agent is not necessary to facilitate crosslinking. The complementary functional groups of the crosslinking agent or the binder may be capped such that storage stable one component coating compositions can be obtained. Upon endcapping, the complementary functional groups of the crosslinking agent or binder are liberated to facilitate the crosslinking.

Suitable binders include (i) poly(meth)acrylates, more particularly hydroxy-functional and/or carboxylate-functional and/or amine-functional poly(meth)acrylates, (ii) polyurethanes, more particularly hydroxy-functional and/or carboxylate-functional and/or amine-functional polyurethanes, (iii) polyesters, more particularly polyester polyols, (iv) polyethers, more particularly polyether polyols, (v) copolymers in the stated polymers, and (vi) mixtures thereof. With particular preference, the at least one binder is selected from polyurethanes, dispersions containing a polyurethane resin fraction containing polyurethane resin(s), poly(meth)acrylates, polyester polyols and mixtures thereof. Use of these binders results in flexible coating layers which are especially suitable for flexible substrates, such as foam substrates used in the footwear industry.

Polyurethanes (PUs) are common general knowledge, commercially available and consist in general of a soft phase of comparatively high molecular weight polyhydroxy compounds, for example of polycarbonate, polyester or polyether segments, and a urethane hard phase formed from low molecular weight chain extenders and di- or polyisocyanates. Processes for preparing polyurethanes (PUs) are common general knowledge. In general, polyurethanes (PUs) are prepared by reaction of
(a) isocyanates, preferably diisocyanates, with
(b) isocyanate-reactive compounds, typically having a molecular weight (Mw) in the range from 500 to 10 000 g/mol, preferably in the range from 500 to 5000 g/mol and more preferably in the range from 800 to 3000 g/mol, and
(c) chain extenders having a molecular weight in the range from 50 to 499 g/mol if appropriate in the presence of
(d) catalysts
(e) and/or customary additive materials.

In what follows, the starting components and processes for preparing the preferred polyurethanes (PUs) will be described by way of example. The components (a), (b), (c) and also if appropriate (d) and/or (e) customarily used in the preparation of polyurethanes (PUs) will now be described by way of example:
As isocyanates (a) there may be used commonly known aliphatic, cycloaliphatic, araliphatic and/or aromatic isocyanates, examples being tri-, tetra-, penta-, hexa-, hepta- and/or octamethylene diisocyanate, 2-methylpentamethylene 1,5-diisocyanate, 2-ethylbutylene 1,4-diisocyanate, pentamethylene 1,5-diisocyanate, butylene 1,4-diisocyanate, 1-isocyanato-3,3,5-trimethyl-5-isocyanatomethylcyclohexane (isophorone diisocyanate, IPDI), 1,4- and/or 1,3-bis(isocyanatomethyl)cyclohexane (HXDI), 1,4-cyclohexane diisocyanate, 1-methyl-2,4- and/or -2,6-cyclohexane diisocyanate and/or 4,4'-, 2,4'- and 2,2'-dicyclohexylmethane diisocyanate, 2,2'-, 2,4'- and/or4,4'-diphenylmethane diisocyanate (MDI), 1,5-naphthylene diisocyanate (NDI), 2,4- and/or 2,6-tolylene diisocyanate (TDI), diphenylmethane diisocyanate, 3,3'-dimethylbiphenyl diisocyanate, 1,2-diphenylethane diisocyanate and/or phenylene diisocyanate. Preference is given to using 4,4'-MDI. Preference is also given to aliphatic diisocyanates, in particular hexamethylene diisocyanate (HDI), and particular preference is given to aromatic diisocyanates such as 2,2'-, 2,4'- and/or 4,4'-diphenylmethane diisocyanate (MDI) and mixtures of the aforementioned isomers.

As isocyanate-reactive compounds (b) there may be used the commonly known isocyanate-reactive compounds, examples being polyesterols, polyetherols and/or polycarbonate diols, which are customarily also subsumed under the term "polyols", having molecular weights (Mw) in the range of 500 and 8000 g/mol, preferably in the range from 600 to 6000 g/mol, in particular in the range from 800 to 3000 g/mol, and preferably an average functionality of 1.8 to 2.3, preferably 1.9 to 2.2, in particular 2, with regard to isocyanates. Preference is given to using polyether polyols, for example those based on commonly known starter substances and customary alkylene oxides, for example ethylene oxide, 1,2-propylene oxide and/or 1,2-butylene oxide, preferably polyetherols based on polyoxytetramethylene (poly-THF), 1,2-propylene oxide and ethylene oxide. Polyetherols have the advantage of having a higher hydrolysis stability than polyesterols, and are preferably used as component (b), in particular for preparing soft polyurethanes polyurethane (PU1).

As polycarbonate diols there may be mentioned in particular aliphatic polycarbonate diols, for example 1,4-butanediol polycarbonate and 1 ,6-hexanediol polycarbonate.

As polyester diols there are to be mentioned those obtainable by polycondensation of at least one primary diol, preferably at least one primary aliphatic diol, for example ethylene glycol, 1,4-butanediol, 1,6-hexanediol, neopentyl glycol or more preferably 1,4-dihydroxymethylcyclohexane (as isomer mixture) or mixtures of at least two of the aforementioned diols, and at least one, preferably at least two dicarboxylic acids or their anhydrides. Preferred dicarboxylic acids are aliphatic dicarboxylic acids such as adipic acid, glutaric acid, succinic acid and aromatic dicarboxylic acids such as for example phthalic acid and particularly isophthalic acid.

Polyetherols are preferably prepared by addition of alkylene oxides, in particular ethylene oxide, propylene oxide and mixtures thereof, onto diols such as for example ethylene glycol, 1,2-propylene glycol, 1,2-butylene glycol, 1,4-butanediol, 1,3-propanediol, or onto triols such as for example glycerol, in the presence of high-activity catalysts. Such high-activity catalysts are for example cesium hydroxide and dimetal cyanide catalysts, also known as DMC catalysts. Zinc hexacyanocobaltate is a frequently employed DMC catalyst. The DMC catalyst can be left in the polyetherol after the reaction, but preferably it is removed, for example by sedimentation or filtration.

Mixtures of various polyols can be used instead of just one polyol.

To improve dispersibility, isocyanate-reactive compounds (b) may also include a proportion of one or more diols or diamines having a carboxylic acid group or sulfonic acid group (b'), in particular alkali metal or ammonium salts of 1,1-dimethylolbutanoic acid, 1,1-dimethylolpropionic acid or

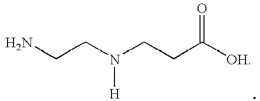

Useful chain extenders (c) include commonly known aliphatic, araliphatic, aromatic and/or cycloaliphatic compounds having a molecular weight in the range from 50 to 499 g/mol and at least two functional groups, preferably compounds having exactly two functional groups per molecule, examples being diamines and/or alkanediols having 2 to 10 carbon atoms in the alkylene radical, in particular 1,3-propanediol, 1,4-butanediol, 1,6-hexanediol and/or di-, tri-, tetra-, penta-, hexa-, hepta-, octa-, nona- and/or decaalkylene glycols having 3 to 8 carbon atoms per molecule, preferably corresponding oligo- and/or polypropylene glycols, and mixtures of chain extenders (c) can also be used.

It is particularly preferable for components (a) to (c) to comprise difunctional compounds, i.e., diisocyanates (a), difunctional polyols, preferably polyetherols (b) and difunctional chain extenders, preferably diols.

Useful catalysts (d) to speed in particular the reaction between the NCO groups of the diisocyanates (a) and the hydroxyl groups of the building block components (b) and (c) are customary tertiary amines, for example triethylamine, dimethylcyclohexylamine, N-methylmorpholine, N,N'-dimethylpiperazine, 2-(dimethylaminoethoxy)ethanol, diazabicyclo(2,2,2)octane (DABCO) and similar tertiary amines, and also in particular organic metal compounds such as titanic esters, iron compounds such as for example iron(III) acetylacetonate, tin compounds, for example tin diacetate, tin dioctoate, tin dilaurate or the tin dialkyl salts of aliphatic carboxylic acids such as dibutyltin diacetate, dibutyltin dilaurate or the like. The catalysts are typically used in amounts of 0.0001 to 0.1 part by weight per 100 parts by weight of component (b).

As well as catalyst (d), auxiliaries and/or additives (e) can also be added to the components (a) to (c). There may be mentioned for example blowing agents, antiblocking agents, surface-active substances, fillers, for example fillers based on nanoparticles, in particular fillers based on CaCO3, nucleators, glidants, dyes and pigments, antioxidants, for example against hydrolysis, light, heat or discoloration, inorganic and/or organic fillers, reinforcing agents and plasticizers, metal deactivators. In a preferred embodiment, component (e) also includes hydrolysis stabilizers such as for example polymeric and low molecular weight carbodiimides. The soft polyurethane preferably comprises triazole and/or triazole derivative and antioxidants in an amount of 0.1 % to 5wt.% based on the total weight of the soft polyurethane in question. Useful antioxidants are generally substances that inhibit or prevent unwanted oxidative processes in the plastics material to be protected. In general, antioxidants are commercially available. Examples of antioxidants are sterically hindered phenols, aromatic amines, thiosynergists, organophosphorus compounds of trivalent phosphorus and hindered amine light stabilizers. Phenolic antioxidants are preferred for use in the antioxidant mixture. In a preferred embodiment, the antioxidants, in particular the phenolic antioxidants, have a molar mass of greater than 350 g/mol, more preferably greater than 700 g/mol and a maximum molar mass (Mw) of not more than 10 000 g/mol, preferably up to not more than 3000 g/mol. They further preferably have a melting point of not more than 180° C. It is further preferable to use antioxidants that are amorphous or liquid. Mixtures of two or more antioxidants can likewise be used as component (e).

As well as the specified components (a), (b) and (c) and if appropriate (d) and (e), chain regulators (chain-terminating agents), customarily having a molecular weight of 31 to 3000 g/mol, can also be used. Such chain regulators are compounds which have only one isocyanate-reactive functional group, examples being monofunctional alcohols, monofunctional amines and/or monofunctional polyols. Such chain regulators make it possible to adjust flow behavior, in particular in the case of soft polyurethanes, to specific values. Chain regulators can generally be used in an amount of 0 to 5 parts and preferably 0.1 to 1 part by weight, based on 100 parts by weight of component (b), and by definition come within component (c).

As well as the specified components (a), (b) and (c) and if appropriate (d) and (e), it is also possible to use crosslinkers having two or more isocyanate-reactive groups toward the end of the polyurethane-forming reaction, for example hydrazine hydrate.

To adjust the hardness of polyurethane (PU), the components (b) and (c) can be chosen within relatively wide molar ratios. Useful are molar ratios of component (b) to total chain extenders (c) in the range from 10:1 to 1:10, and in particular in the range from 1:1 to 1:4, the hardness of the soft polyurethanes increasing with increasing (c) content. The reaction to produce polyurethane (PU) can be carried out at an index in the range from 0.8 to 1.4:1, preferably at an index in the range from 0.9 to 1.2:1 and more preferably at an index in the range from 1.05 to 1.2:1. The index is defined by the ratio of all the isocyanate groups of component (a) used in the reaction to the isocyanate-reactive groups, i.e., the active hydrogens, of components (b) and if appropriate (c) and if appropriate monofunctional isocyanate-reactive components as chain-terminating agents such as monoalcohols for example.

Polyurethane (PU) can be prepared by conventional processes in a continuous manner, for example by the one-shot or the prepolymer process, or batchwise by the conventional prepolymer operation. In these processes, the reactant components (a), (b), (c) and if appropriate (d) and/or (e) can be mixed in succession or simultaneously, and the reaction ensues immediately.

In one embodiment, two different polyurethanes (i.e. polyurethane (PU1) and polyurethane (PU2)) are used as binder, wherein polyurethane (PU1) is a soft polyurethane having a shore hardness of less than 60, and polyurethane (PU2) is a hard polyurethane having a shore hardness of above 60 to 100. The shore hardness can be determined according to DIN 53505:2000-08 after 3 s.

The soft polyurethane (PU1) can be prepared as previously described in relation to polyurethane (PU). Hard polyurethane (PU2) can in principle be prepared similarly to soft polyurethane (PU1), but other isocyanate-reactive compounds (b), other mixtures of isocyanate-reactive compounds (b) or other ratios of polyisocyanates, are used. Examples of such compounds (b) are in particular 1,4-butanediol, 1,6-hexanediol and neopentyl glycol, either mixed with each other or mixed with polyethylene glycol. In one example, (PU1) and (PU2) are each prepared using a mixtures of diisocyanates, for example mixtures of HDI and IPDI, however larger proportions of IPDI being chosen for the preparation of hard polyurethane (PU2) than for the preparation of soft polyurethane (PU1).

The use of a combination of soft polyurethane (PU1) and hard polyurethane (PU2) as binder in the coating composition (C1) is especially preferred, if the coating composition (C1) is used in the inventive transfer-coating process previously described.

A suitable dispersion (denoted as dispersion (1) hereinafter) containing a polyurethane resin fraction containing at least one polyurethane resin include an aqueous dispersion containing a polyurethane resin fraction having a gel fraction of the polyurethan resin fraction of at least 50 wt.%, a glass transition at a temperature of less than -20°C and a melting transition at a temperature of less than 100°C.

Preferably, the gel fraction of the polyurethan resin fraction is at least 55 wt.% and in particular up to 100 wt.%, such as for example 98 wt.% or 99 wt.% (for measurement method, see Examples section), i.e. the polymer particles constituting the polyurethane resin fraction are at least partly intramolecularly crosslinked. The latter means that the polymer structures present within a particle equate at least partly to a typical macroscopic network with a three-dimensional network structure. While the particles can in part form crosslinking bridges between one another (something which in fact can hardly be ruled out simply from the preparation process), the system is nevertheless in any case a dispersion with discrete particles present in it that have a measurable particle size.

Preferably, the polyurethane resin fraction has its glass transition at a temperature of -100°C to less than -20°C, very preferably of -90 to -40°C and its melting transition at a temperature of -20°C to less than 90°C, vey preferably -15°C to less than 80°C (for measurement method, see Examples section) and thus has a semicrystalline character (i.e. has amorphous domains having a glass transition temperature and crystalline domains showing a melting transition). Accordingly, the polyurethane resin fraction may comprise polyurethane resins which are semicrystalline, and/or it comprises both highly crystalline and amorphous polyurethane resins.

The dispersion medium is preferably water, i.e. the dispersion (1) is an aqueous dispersion. The particle size of the polyurethane resin particles is preferably from 1 to 100 micrometers. The particle size refers to the particle size distribution (distribution curve, volume density) present in the dispersion and does not refer to the average particle size. The distribution curves (volume density) can be determined by laser diffraction, allowing optimum capture of size distributions within the corresponding range. Measurement took place for the purposes of the present invention with a Mastersizer 3000 particle size measuring instrument (from Malvern Instruments). To set the concentration range suitable for the measurement, the sample was diluted with particle-free, deionized water as dispersing medium (refractive index: 1.33), the obscuration was set at between 3% and 15%, depending on each sample, and measurement took place in the Hydro 2000G dispersing unit (from Malvern Instruments). Measurement took place at a stirring speed of 3000 1/min, with equilibration at this speed for 5 minutes prior to the measurement. The volume- weighted size distribution was calculated using the Malvern Instruments software (version 5.60) by means of Fraunhofer approximation.

With preference, the dispersion (1), based on the total weight of the polyurethane resin fraction, comprises at least 10 wt.%, preferably at least 20 wt.%, more preferably at least 30 wt.%, and very preferably at least 50 wt.% of polyurethane resin particles having a particle size of more than 1 micrometer, preferably 1 to 100 micrometers. The polyurethane resin fraction, which consists of at least one polyurethane resin which is present in the form of disperse particles, therefore includes at least 10 wt.% (or at least 20 wt.%, 30 wt.%, 50 wt.%) of particles having such sizes.

The polyurethane resin fraction of the dispersion (1) is preferably thermochemically curable only in minor efficiency with components containing isocyanate groups, such as a polyisocyanates, for example. This means that by combining the corresponding polyurethane resins of the dispersion with a component containing isocyanate groups it is not possible to form a typical thermochemically cured coating. Accordingly, the at least one polyurethane resin in the polyurethane resin fraction preferably possesses only a minor amount of functional groups which are able to enter into crosslinking reactions with isocyanate groups under crosslinking conditions as described earlier on above.

In the preparation of the polyurethane resins which make up the polyurethane resin fraction, the amounts of the starting products for the preparation are preferably selected such that the ratio of the total molar amount of isocyanate groups to the total molar amount of functional groups which are able to enter into crosslinking reactions with isocyanate groups, more particularly of hydroxyl groups and amino groups, is greater than 0.9. More preferably the stated ratio is greater than 0.95, especially at least 1.0, very preferably exactly 1.0.

The polyurethane resin fraction preferably comprises potentially ionic groups, for example potentially anionic groups, preferably carboxylic or sulfonic acid groups, especially carboxylic acid groups. Such groups are known to be advantageous in the formation of an aqueous dispersion. Accordingly, in the preparation of the polyurethane resins which make up the polyurethane resin fraction, preference is given to using monomers which as well as groups for reaction in the preparation of urethane bonds, preferably hydroxyl groups and/or amino groups, also include carboxylic or sulfonic acid groups. In this way the groups in question are introduced into the prepolymer. Examples of compounds preferred in this context include monocarboxylic acids containing two hydroxyl groups or two amino groups, such as dihydroxypropionic acid, dihydroxysuccinic acid, and dihydroxybenzoic acid, for example, and also N-(2-aminoethyl)-2-aminoethanecarboxylic acid and N-(2-aminoethyl)-2-aminoethanesulfonic acid. Especially preferred are alpha,alpha-dimethylolalkanoic acids such as 2,2-dimethylolacetic acid, 2,2-dimethylolpropionic acid, 2,2-dimethylolbutyric acid, and 2,2-dimethylolpentanoic acid, especially 2,2-dimethylolpropionic acid, and also N-(2-aminoethyl)-2-aminoethanecarboxylic acid. A controlled, at least proportional neutralization of the stated groups using neutralizing agents already identified above is of course likewise possible.

The fraction of the polyurethane resin fraction in the dispersion (1) is preferably 15 to 60 wt.%, preferably 20 to 50 wt.%, based in each case on the total amount of the dispersion, while the fraction of water in the dispersion is preferably 40 to 85 wt.%, preferably 50 to 80 wt.%, based in each case on the total amount of the dispersion. The sum of the fraction of the polyurethane resin fraction and the fraction of water in the dispersion is preferably at least 75 wt.%, preferably at least 85 wt.%.

The dispersions (1) may be prepared by methods known to the skilled person, as for example by reaction of corresponding starting components in organic solvents for the preparation of polyurethane resins, and subsequent dispersal in aqueous phase and removal of organic solvents. Corresponding dispersions (1) are also available commercially, for example, under the trade name Novomatt GG (from Stahl B.V.).

A further suitable dispersion (denoted as dispersion (2) hereinafter and being different from the dispersion (1) previously described) containing a polyurethane resin fraction containing at least one polyurethane resin, in particular exactly one polyurethane resin, is an aqueous dispersion containing a polyurethane resin fraction having a gel fraction of at least 50 wt.%, preferably at least 60 wt.%, especially preferably of at least 75 wt.%.

The average particle size (volume average) of the polyurethane resin fraction of the dispersion (2) is preferably from 20 to 500 nanometers, more preferably from 40 to 300 nanometers. This can be measured, in accordance with DIN EN ISO 11357-1, by photon correlation spectroscopy (PCS) by means of a Malvern Nano S90 instrument (from Malvern Instruments) at 25 ± 1°C, and can be evaluated using a digital correlator, with the assistance of the Zetasizer analytical software version 6.32 (from Malvern Instruments), and the measurements can be verified using polystyrene standards having certified particle sizes between 50 to 3000 nm.

The polyurethane resin fraction of the dispersion (2) preferably has its glass transition at a temperature of less than 0°C. The glass transition is preferably in the range from -100°C to -20°C, more preferably -80°C to -30°C.

Even more preferably the polyurethane resin fraction of the dispersion (2) has no melting transition in the range of less than 100°C and therefore has a purely amorphous character.

The polyurethane resin fraction of the dispersion (2) is preferably not effectively thermochemically curable with components containing isocyanate groups, such as polyisocyanates. Hence it is the case that the hydroxyl number and the amine number of the polyurethane resin fraction of the dispersion (2) are preferably less than 20.

In the preparation of the polyurethane resins of the dispersion (2) that make up the polyurethane resin fraction, the amounts of the starting products for the preparation are preferably selected such that the ratio of the total molar amount of isocyanate groups to the total molar amount of functional groups which are able to enter into crosslinking reactions with isocyanate groups, more particularly of hydroxyl groups and amino groups, is greater than 0.9. More preferably the stated ratio is greater than 0.95, more particularly at least 1.0, very preferably exactly 1.0.

The polyurethane resin fraction of the dispersion (2) preferably comprises potentially ionic groups, as for example potentially anionic groups, preferably carboxylic or sulfonic acid groups.

The parent polyurethane resins are preferably prepared as follows. In organic solution, (i) a polyurethane prepolymer containing isocyanate groups is prepared, and (ii) this prepolymer is reacted with monocarboxylic acids containing two amino groups, before, during, or after the prepolymer has been dispersed in aqueous phase. In this way, then, the potentially anionic groups are incorporated into the polymer as well. Before, during, or after the dispersing, it is also possible optionally for a reaction to be carried out with further typical diamines, for chain extension. Monocarboxylic acids containing two amino groups and used with preference are N-(2-aminoethyl)-2-amino-ethanecarboxylic acid and N-(2-aminoethyl)-2-aminoethanesulfonic acid. The dispersions (3) used in the examples were also prepared in this way.

The fraction of the polyurethane resin fraction in the dispersion (2) is preferably 25 to 55 wt.%, preferably 30 to 50 wt.%, based in each case on the total amount of the dispersion (3) while the fraction of water in the dispersion (2) is preferably 45 to 75 wt.%, preferably 50 to 70 wt.%, based in each case on the total amount of the dispersion. The sum of the fraction of the polyurethane resin fraction and of the fraction of water in the dispersion (2) is preferably at least 75 wt.%, preferably at least 85 wt.%.

Dispersions (2) of this kind as well are available commercially, for example, under the commercial designation Bayhydrol UH (from Bayer), for example.

Use of dispersion (1) and/or (2), in particular of dispersion (1) and (2), as binder in the coating composition (C1) is particularly preferred if the coating composition (C1) is used in the inventive post-coating process.

Suitable poly(meth)acrylates include hydroxy-functional poly(meth)acrylates. These hydroxy-functional poly(meth)acrylates preferably possess a hydroxyl number of 65 to 100 mg KOH/g, more preferably of 70 to 95 mg KOH/g, more particularly of 75 to 90 mg KOH/g or of 80 to 85 mg KOH/g. The hydroxyl number in the context of the present invention may be determined according to EN ISO 4629-2:2016 and is based in each case on the solids content.

The hydroxy-functional poly(meth)acrylates preferably possess an acid number of less than 25 mg KOH/g, more preferably an acid number of 1 to 20 mg KOH/g, very preferably an acid number of 4 to 16 mg KOH/g, more particularly of 6 to 14 mg KOH/g or of 8 to 12 mg KOH/g. The acid number for the purposes of the present invention may be determined according to DIN EN ISO 2114:2002-06 (method A) and is based in each case on the solids content.

The number-average molecular weight Mₙ and the weight-average molecular weight M_{w} may be determined by means of gel permeation chromatography (GPC) using a polymethyl methacrylate standard (PMMA standard) (DIN 55672-1:2016-03). The number-average molecular weight Mₙ of the hydroxy-functional poly(meth)acrylate is preferably in a range from 4000 to 10 000 g/mol, more preferably 5000 to 9000 g/mol, very preferably 5500 to 8000 g/mol, more particularly 6000 to 7500 g/mol. The weight-average molecularweight M_{w} of the hydroxy-functional poly(meth)acrylate is preferably in a range from 8000 to 30 000 g/mol, more preferably 10 000 to 25 000 g/mol, very preferably 12 000 to 22 000 g/mol, more particularly 14 000 to 20 000 g/mol.

The polydispersity PD (= M_{w}/ Mₙ) of the hydroxy-functional poly(meth)acrylate is preferably in the range from 2 to 3, more particularly from 2.2 to 2.8.

The hydroxy-functional poly(meth)acrylate preferably possesses a hydroxyl functionality of 5 to 15, more preferably of 6 to 14, more particularly of 8 to 12.

The hydroxy-functional poly(meth)acrylate may be obtained by means of the polymerization reactions that are commonplace and familiar to a person of ordinary skill in the art, from ethylenically unsaturated monomers, preferably monoethylenically unsaturated monomers. Initiators which may be used include peroxides, such as di-tert-butyl peroxide, for example. It is therefore preferred for the hydroxy-functional poly(meth)acrylate to be preparable by reaction of
(a1) at least one hydroxy-functional (meth)acrylic ester, more particularly (meth)acrylic ester of the formula HC=CRx-COO-Ry-OH, in which Rx is H or CH3 and Ry is an alkylene radical having 2 to 6, preferably 2 to 4, more preferably 2 or 3 carbon atoms,
(a2) at least one carboxy-functional ethylenically unsaturated monomer, more particularly (meth)acrylic acid, and
(a3) at least one hydroxyl-free and carboxyl-free ester of (meth)acrylic acid and/or at least one hydroxyl-free and carboxyl-free vinyl monomer, more particularly styrene.

Examples of hydroxy-functional (meth)acrylic esters (a1) are preferably hydroxyethyl methacrylate, hydroxyethyl acrylate, hydroxypropyl methacrylate, and hydroxypropyl acrylate, and with particular preference hydroxyethyl methacrylate and 2-hydroxypropyl methacrylate. The amount of hydroxy-functional (meth)acrylic esters (a1) used in preparing the hydroxy-functional poly(meth)acrylate is calculated on the basis of the target range for the hydroxyl number, of 50 to 120 mg KOH/g.

The hydroxy-functional poly(meth)acrylate preferably contains small quantities of carboxyl groups. These groups are introduced into the poly(meth)acrylate during the polymerization reaction, through the use, for example, of carboxy-functional monomers (a2), more preferably through the use of acrylic acid and/or methacrylic acid. These monomers (a2), especially (meth)acrylic acid, are present preferably in a total amount of 20 to 45 wt.%, more preferably of 25 to 40 wt.%, more particularly of 30 to 35 wt.%, based in each case on the total weight of all the monomers used in preparing the hydroxy-functional poly(meth)acrylate.

Besides the hydroxy-functional (a1) and the carboxy-functional (a2) ethylenically unsaturated monomers, use is also made when preparing the hydroxy-functional poly(meth)acrylate of ethylenically unsaturated monomers (a3), more particularly monoethylenically unsaturated monomers (a3), these monomers being free both of hydroxyl and of carboxyl groups. Employed with particular preference as vinyl monomer (a3) is styrene. The vinyl monomer (a3), more particularly styrene, is present preferably in a total amount of 30 to 60 wt.%, more preferably of 35 to 55 wt.%, more particularly of 40 to 50 wt.%, based in each case on the total weight of all the monomers used in preparing the hydroxy-functional poly(meth)acrylate.

The hydroxy-functional poly(meth)acrylate may be used in an organic solvent, preferably an aprotic solvent. A typical solvent for this purpose, for example, is n-butyl acetate, which may also be used when preparing the at least one hydroxy-functional poly(meth)acrylate. If the hydroxy-functional poly(meth)acrylate is used in a solvent, then the solvent is reckoned as part of the solvent L.

Suitable polyester polyols possess a hydroxyl number of 100 to 200 mg KOH/g, more preferably of 110 to 180 mg KOH/g, very preferably of 120 to 160 mg KOH/g, based in each case on the solids content.

The acid number of the polyester polyol is preferably 0 to 9 mg KOH/g, more particularly 0.2 to 2 mg KOH/g, based in each case on the solids content. The hydroxyl number and acid number of the polyester polyol may be determined as above in conjunction with the hydroxy-functional poly(meth)acrylate.

The number-average molecular weight of the polyester polyol is preferably in the range from 800 to 3000 g/mol, more preferably 1000 to 2000 g/mol, more particularly from 1000 to 1600 g/mol. The determination here is made as in connection with the determination of the molecular weight of the hydroxy-functional poly(meth)acrylate.

The polyester polyol is preferably branched.

The polyester polyol preferably possesses a hydroxyl functionality of 2.2 to 4, more preferably of 2.5 to 3.5, very preferably of 2.7 to 3.3.

Use of a hydroxy-functional poly(meth)acrylate and a polyester polyol as binder in the coating composition (C1) is particularly preferred if the coating composition (C1) is used in the inventive in-mold coating process.

The coating compositions (C1) may comprise a single binder or a mixture of binders. In case the coating compositions comprise a mixture of binders, the binders may be selected from the same chemical type (for example at least 2 polyurethanes) or may be selected from different chemical types (for example a poly(meth)acrylate and a polyester polyol). It may be beneficial if the coating composition (C1) comprises two different binders, preferably two different polyurethanes P1 and P2 or two different polyurethane resin fractions or a hydroxy-functional poly(meth)acrylate and a polyester polyol. In this regard, it may be preferred if the coating compositions comprise a weight ratio of the soft polyurethane (PU1) to the hard polyurethane (PU2) of 1 : 1 to 1 : 20, preferably of 1 : 5 to 1 : 15, very preferably of 1 : 8 to 1 : 12. It may further be preferred if the weight ratio of the resin fraction in the aqueous dispersion (1) to the second polyurethane resin fraction in the aqueous dispersion (2) is 5 : 1 to 1 : 5, preferably 3 : 1 to 1 : 3, very preferably 2 : 1 to 1.5 : 1. It may further be preferred if the weight ratio of the hydroxy-functional poly(meth)acrylate to the polyester polyol is 2 : 1 to 1 : 2, preferably 1.5 : 1 to 1 : 1.5, very preferably 1 to 1.2 to 1 : 1.4.

The at least one binder is preferably present in a total amount of 5 to 50 wt.% solids, preferably of 10 to 40 wt.% solids, very preferably of 20 to 35 wt.% solids, based in each case on the total weight of the coating composition (C1).

### Naturally occurring pigment:

The second mandatory component of the coating composition (C1) is at least one naturally occurring pigment. Use of these sustainable pigments allows to produce colored coating layers more ecologically, because the used pigments are obtained from dye plants or from the soil and thus render the use of pigments produced from carbonous feedstock or by using petroleum aromatic chemistry superfluous.

The at least one naturally occurring pigment may be selected from curcuma pigment, henna pigment, kamala pigment, madder root pigment, green earth pigments and mixtures thereof. Green earth pigments may pigment may be selected from Bavarian green earth, Russian green earth, green earth from France and/or celadonite. The at least one naturally occurring pigment may be selected from ochre pigments, such as yellow ochre and red ochre pigments. With preference, the coating composition (C1) only contains one of the aforementioned pigments to ensure a high optical quality in terms of color of the resulting coating layer. However, it is also possible to use a mixture of the aforementioned pigments to achieve colors which are different from the color achieved when using a single pigment.

The henna pigment is preferably a henna red pigment. The green earth pigment is preferably selected from Bavarian green earth pigment or Russian green earth pigment.

Curcuma pigment may be obtained from the plant turmeric or Curcuma domestica from the ginger family (Zingiberaceae). The plant contains curcumin, demethoxycurcumin and bisdemethoxycurcumin which are diaryloylmethane dyes. All three dyes together are commonly referred to as curcumin. In addition to these coloring substances, turmeric also contains essential oil, which is often extracted from the dried and ground rhizomes of the turmeric plant using steam. Curcuma pigment may be obtained after distillation of the oil by solvent extraction of the remaining powder, purification of the extract by crystallization, reaction of the purified extract with aluminum oxide in aqueous medium, filtering of the produced insoluble pigment and washing and drying of the filtered pigment.

Henna pigment may be obtained from the leaves of the Egyptian dyeing shrub Lawsonia inermis (Lythraceae family), which is also called henna shrub or Cyprus shrub. The plant is native to European and African Mediterranean countries, Madagascar and northern Australia. It is also cultivated in the Orient, mainly in India. The henna red pigment is obtained by drying and grounding the leaves of said henna shrub. The coloring principle of henna is lawson, which is formed from the glycosides hennoside A, B and C by splitting off of the sugar in a fermentation process, for example by stirring the henna powder with warm water.

Kamala pigment is a reddish brown powder which is obtained from the glandular and tufted hairs of the fruits of the Monkey face tree Mallotus phillipinensis (formerly Rottlera tinctoria). The monkey face tree belongs to the family of the Spurge family (Euphorbiacae) and, as the Latin name implies, is native to the Phillipines. The tree is also found in Arabia, Pakistan, from the Near East to southeastern China, as well as in New Guinea and northern Australia. The pigment is obtained by shaking the fruits in baskets until all the hairs have broken off from the fruit and fallen through the basket walls onto blankets or cloths spread out underneath and grinding the hairs. Kamala pigment mainly contains resins (kamal red and rottlerin).

Madder root pigment is obtained from the root of the plant Rubia tinctoria. The root pigment can be obtained by drying and grounding the root, treating the resulting powder with steam and acids, and precipitating the madder root pigment with salts containing aluminum and/or tin. The produced pigments have shades ranging from orange to pink to dark red, depending on which pigments have been isolated. If madder root powder is firstly extracted with dilute and then with concentrated sulfuric acid, garancine is obtained, which can be used as a starting material for madder root pigment. Another extraction process, which is also carried out with sulfuric acid and is followed by a heat treatment of the extract, results in the so-called "Kopp's Purpurin". Kopp's Purpurin contains mainly purpurin and pseudopurpurin and yields, upon precipitation with alum a beautiful red pigment. The madder root pigment can also be obtained by drying and grounding the root.

Bavarian green earth pigment can be obtained from green sandstones found in Bavaria, for example in the region of Miesbach and Bichl. These sandstones mainly consist of glauconite. Russian green earth pigment is also called Volkonskoite and is mined in Russia. It is a hydrated chrome-iron-silicate.

Coating compositions (C1) used within the post-mold coating process include at least one naturally occurring pigment having a D₅₀ particle size of 5 to 150 µm. Coating compositions (C1) used within transfer coating process and the in-mold coating process may include at least one naturally occurring pigment having a D₅₀ particle size of 1 to 150 µm, more preferably of 5 to 35 µm, even more preferably of 10 to 30 µm, very preferably of 15 to 25 µm. The particle size may be determined, for example, according to DIN EN ISO 1524:2020-11. Use of naturally occurring pigment(s) having the aforementioned particle sizes allows a uniform dispersion of the pigment in the coating composition (C1) and ensures a uniform appearance of the colored coating layer as well as a high hiding power of the colored coating layer resulting from the coating composition (C1).

The at least one naturally occurring pigment may be dispersed in powder form in the coating composition (C1) or may be incorporated into the coating composition (C1) in the form of a pigment paste. The pigment paste may be prepared by mixing the naturally occurring pigment(s) with water, a dispersing agent, a defoamer, a leveling agent and optionally a pH adjustment agent, grinding the obtained mixture, and filtering the grinded mixture. Grinding of the mixture can be performed by grinding methods commonly used in the art, for example by using an agitator mill. Filtering of the grinded mixture can be performed by using a filter, such as a filter with a 120 mesh size, to remove the grinding beads and to ensure a homogenous pigment paste. To avoid incompatibilities of the pigment paste with the binder matrix, it may be beneficial to use a pH adjustment agent in an amount such that the pH of the pigment paste is in the range of 6.5 to 9, preferably of 7.5 to 8. This avoids incompatibilities with the binder matrix and ensures homogenous incorporation of the pigment paste into the binder matrix. If the naturally occurring pigment(s) is/are used in powder form in the coating composition (C1), the resulting coating layer has a "used look", i.e. a lighter color than achieved when using a pigment paste comprising the respective pigment(s), thus allowing to tune the appearance of the coated substrate. Moreover, the color of the resulting coating layer can be tuned by using different amounts of a pigment to obtain a more intense color (i.e. using the pigment in higher amounts) or a lighter color (i.e. using the pigment in lower amounts).

Suitable total amounts of the at least one naturally occurring pigment in the coating composition include 0.1 to 15 wt.%, preferably of 0.5 to 12 wt.%, more preferably of 1 to 10 wt.%, very preferably of 3 to 6 wt.%, based in each case on the total weight of the coating composition.

According to a particularly preferred embodiment, the coating composition (C1) comprises - apart from the at least one naturally occurring pigment - 0 wt.%, based on the total weight of the coating composition, of further pigments and/or fillers and/or dyes. Thus, particularly preferred coating compositions (C1) only comprise at least one, in particular exactly one, naturally occurring pigment, as sole pigment, i.e. no further pigments and/or fillers and/or dyes are present in the coating compositions (C1) to ensure that the pigmentation is based entirely on sustainable pigments.

### Solvent:

The composition (C1) may be a solvent-based composition or an aqueous composition. In the case of a solvent-based composition, organic solvents are included as a principal constituent. Organic solvents constitute volatile constituents of the composition of the invention, and undergo complete or partial vaporization on drying or flashing, respectively. The principal constituent of aqueous compositions is water.

Preferably, the at least one solvent is selected from organic solvents, water, and mixtures thereof, and is present in a total amount of 40 to 90 wt.%, more preferably 45 to 85 wt.%, and very preferably 50 to 80 wt.%, especially 60 to 70 wt.%, based in each case on the total weight of the coating composition (C1).

Organic solvents preferred in the context of the present invention are aprotic. With particular preference they are polar aprotic organic solvents. With very particular preference the organic solvents are chemically inert toward the remaining constituents of the composition. Preferred organic solvents in the context of the present invention are, for example, ketones such as acetone, methyl ethyl ketone, cyclohexanone, methyl isobutyl ketone, methyl isoamyl ketone or diisobutyl ketone; esters such as ethyl acetate, n-butyl acetate, ethylene glycol diacetate, butyrolactone, diethyl carbonate, propylene carbonate, ethylene carbonate, 2-methoxypropyl acetate (MPA), and ethyl ethoxypropionate; amides such as N,N-dimethylformamide, N,N-dimethylacetamide, N-methylpyrrolidone, and N-ethylpyrrolidone; methylal, butylal, 1,3-dioxolane, glycerol formal; and, somewhat less preferably because they are nonpolar, hydrocarbons such as benzene, toluene, n-hexane, cyclohexane, and solvent naphtha. Especially preferred solvents belong to the class of the esters, among which n-butyl acetate and 1-methoxypropyl acetate are very especially preferred.

### Crosslinking agent:

The coating composition (C1) may comprise at least one crosslinking agent. This may be preferred if the binder is a chemically curable binder comprising functional groups, such as hydroxy groups, which are able to react with complementary groups present in the crosslinking agent.

Suitable crosslinking agents include amino resins, unblock polyisocyanates, at least partially blocked polyisocyanates, polycarbodiimides, UV light, heat, photoinitiators, and mixtures thereof, in particular unblocked polyisocyanates and polycarbodiimides.

Suitable unblocked polyisocyanates include hexamethylene diisocyanate, octamethylene diisocyanate, decamethylene diisocyanate, dodecamethylene diisocyanate, tetradecamethylene diisocyanate, trimethylhexane diisocyanate, tetra-methylhexane diisocyanate, isophorone diisocyanate (IPDI), 2-isocyanatopropylcyclohexyl isocyanate, dicyclohexylmethane 2,4'-diisocyanate, dicyclohexylmethane 4,4'-diisocyanate, 1,4- or 1 ,3-bis(isocyanatomethyl)cyclohexane, 1,4- or 1,3- or 1,2-diisocyanatocyclohexane, and 2,4- or 2,6-diisocyanato-1-methylcyclohexane, the dimers and trimers thereof, and also mixtures of these polyisocyanates.

Preferred polyisocyanates are the known dimers and/or trimers of the aforementioned diisocyanates, in other words, in particular, the uretdiones, iminooxadiazinediones and isocyanurates, known per se, of the aforementioned diisocyanates and mixtures of these dimers and/or trimers. Such polyurethanes are commercially available, for example under the tradename Desmodur^{®} N 3800 (iminooxadiazinediones) or N 3900 (isocyanurates). Use of polyisocyanates containing at least one iminooxadiazinedione ring or polyisocyanates containing at least one isocyanurate ring or a mixture of such polyisocyanates is particularly preferred if the binder comprises a mixture of poly(meth)acrylate and polyester polyol previously described. In this case, the hardness of the resulting cured coating layer can be tuned by the crosslinking agent because the use of polyisocyanates containing iminooxadiazinedione structures results in cured coating layers having a higher hardness than compared to cured coating layers being prepared using polyisocyanates containing isocyanurate structures.

The polyisocyanates preferably possess an NCO group functionality of greater than 2.4 to 5, preferably 2.6 to 4, more preferably 2.8 to 3.6 or an NCO content of 9% to 16%, more preferably of 10% to 14%.

The polyisocyanates may be hydrophilically modified, i.e. they contain groups which, in comparison to groups and molecular units that are present in common polyisocyanates, are more hydrophilic. Such hydrophilic groups include polyether groups and polyester groups. Preferred hydrophilically modified polyisocyanate are therefore polyether-modified and/or polyester-modified polyisocyanates. Polyether-modified polyisocyanates are especially preferred. The use of such polyether-modified and/or polyester-modified polyisocyanates is particularly preferred in combination if the binder comprises the aqueous dispersions (1) and (2) as described previously.

To introduce the hydrophilic modifications it is possible, for example, to use the alkoxypoly(oxyalkylene) alcohols which are known to the skilled person and are also available commercially. In that case there is then a proportional reaction of the isocyanate groups in the polyisocyanate with the polymeric monoalcohols, as a result of which the polyether modifications - that is, for example, the poly(oxyalkylene) groups - are attached covalently to the polyisocyanate by formation of urethane bridges, and a hydrophilically modified polyisocyanate s formed. Similar comments apply in respect of polyester-modified polyisocyanates. Preferred are aliphatic, linear polyester groups, especially preferably polylactone groups, more preferably polycaprolactone groups. Polycaprolactones and their preparation, through reaction of a monoalcohol with epsilon-caprolactone, for example, are known. They too can be introduced into a polyisocyanate by common methods, via reaction of the at least one hydroxyl group they contain with an isocyanate group.

The fraction of isocyanate groups modified with polyester and/or polyether groups may vary widely and is situated for example in the range of 1-60 mol%, preferably 2-55 mol%, especially preferably 5-50 mol%. The stated molar fraction is based on the free isocyanate groups of the polyisocyanate before the modification. The aforedescribed hydrophilically modified polyisocyanates are available commercially.

Polycarbodiimides used with particular preference are obtainable by reaction of polyisocyanates with polycarbodiimides and subsequent chain extension and/or termination by means of hydrophilic compounds containing hydroxyl groups and/or amine groups. Suitable dispersions are described in the laid-open specifications EP1644428 A2 and EP1981922 A2, for example.

The coating composition preferably comprises the at least one crosslinking agent in a total amount of 1 wt.% to 40 wt.% solids, preferably of 2 to 30 wt.% solids, more particularly of 6 to 12 wt.% or 15 to 25 wt.% solids, based in each case on the total weight of the coating composition (C1).

### Additive(s):

The coating compositions (C1) may further comprise at least one additive. Such additives may be used to enhance the visual and mechanical properties of the resulting coating layer by ensuring a uniform dispersion of the pigments in the coating composition (C1) as well as a good leveling of the applied coating composition on the substrate, avoiding foaming of the composition during application and avoiding degradation of the naturally occurring pigment upon exposure to environmental conditions, such as sunlight.

Suitable additives include dispersing agents, leveling agents, pH adjustment agents, defoaming agents, biocides, UV absorbers, crosslinking catalysts, ethoxylated fatty alcohols, fatty acids, polyethermodified polyalkylsiloxanes, hydroxy-functional polyalkylsiloxanes and mixtures thereof.

Dispersing agents that can be used as additives in the coating composition (C1) to disperse the at least one naturally occurring pigment, are, for example, commonly used dispersing agents used to disperse pigments in coating compositions. Examples of such dispersing agents include (i) polycarboxylate ethers, (ii) poly(meth)acrylates, (iii) polyvinyls, (iv) copolymers, in particular block copolymers comprising a polycarboxylate ether, a poly(meth)acrylate, a polyvinyl, and any mixtures thereof; or (v) mixtures of the aforementioned polymers and copolymers. With particular preference, anionic copolymers comprising a polymethacrylate and a polyvinyl are used as dispersing agent. Such dispersing agents are commercially available as "DISPERBYK-190" (by BYK-Chemie GmbH), "TEGO Dispers 755W' (by Evonik Industries), "TEGO Dispers 765W" (by Evonik Industries), "DISPERBYK-2015" (by BYK-Chemie GmbH), "Floren GW-1500" (by Kyoeisha Chemical Co., Ltd.), Dispex^{®} Ultra PX 4290 (BASF SE) and the like can be used. DISPERBYK-190 and TEGO Dispers 755W are each a polymer having a branched (comb-type) structure, have a copolymer chain of styrene-maleic acid, have a carboxyl group as a functional group directly bonded to the copolymer chain, and have a hydrophilic polyoxyalkylene chain branched from the copolymer chain. TEGO Dispers 765W is a polymer having a branched (comb-type) structure, has a carboxyl group as a functional group directly bonded to the polymer chain, and is a high-molecular weight polymer having a pigment-affinic functional group. DISPERBYK-2015 is a polymer having a branched (comb-type) structure, is an acrylic copolymer obtained by control polymerization, and has a carboxyl group as a functional group directly bonded to the polymer chain. Floren GW-1500 is a polymer having a branched (comb-type) structure, and has a carboxyl group as a functional group directly bonded to the polymer chain. Particularly preferred dispersing agents are Dispex^{®} Ultra PX 4290 and TEGO Dispers 755W.

Suitable total amounts of the at least one dispersing agent include 0.1 to 10 wt.%, preferably 0.5 to 6 wt.%, very preferably 1 to 3 wt.%, based in each case on the total weight of the coating composition (C1).

Leveling agents can be used in the coating compositions (C1) to ensure a good leveling of the applied coating composition on the substrate. A good leveling on the substrate is required to achieve a uniform optical appearance of the coating on the substrate, irrespective of the form of the substrate. Examples of suitable leveling agents include nonionic surfactants, cationic surfactants, anionic surfactants or mixtures thereof. Particularly preferred leveling agents are nonionic acetylenic diol compounds, such as nonionic acetylenic diol compounds of formula (I)

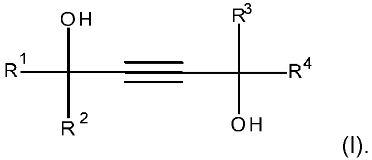

In Formula (I), each of R¹, R², R³, and R⁴ independently represents a hydrocarbon group having 1 to 20 carbon atoms which may contain one or more heteroatoms. The substituents R¹, R², R³, and R⁴ may be the same as or different from one another.

Each of R¹, R², R³, and R⁴ in Formula (I) may have a linear or branched chain structure. Among them, R¹ and R⁴ are preferably any of alkyl groups each having 2 to 10 carbon atoms, and more preferably any of those having 4 carbon atoms, i.e., n-butyl group, sec-butyl group, tert-butyl group, and isobutyl group. The substituents R² and R³ are preferably any of alkyl groups having 1 to 4 carbon atoms, and more preferably any of those having 1 or 2 carbon atoms, i.e., methyl group and ethyl group. Specific examples of the acetylenic diol compounds represented by Formula (I) include 7,10-dimethyl-8-hexadecyne-7,10-diol, 4,7-dimethyl-5-decyne-4,7-diol, 2,4,7,9-tetramethyl-5-decyne-4,7-diol, and 3,6-dimethyl-4-octyne-3,6-diol.

The acetylenic diol compound represented by Formula (I) may be a commercial product, such as Surfynol 104 Series products supplied by Air Products and Chemicals Inc., which are exemplified by Surfynol 104E, Surfynol 104H, Surfynol 104A, Surfynol 104BC, Surfynol 104DPM, Surfynol 104PA, and Surfynol 104PG-50.

Suitable total amounts of the at least one leveling agent include 0 wt.% or of 0.02 to 3 wt.%, based in each case on the total weight of the coating composition (C1).

The at least one pH adjustment agent may be used to adjust the pH of the coating composition (C1) or the pH of the pigment paste. Examples of suitable pH adjustment agents include inorganic and organic bases, in particular from organic nitrogen containing bases. With particular preference, N,N-dimethylethanolamine is used as pH adjustment agent.

Defoaming agents can be used in the coating compositions (C1) to avoid foaming during manufacturing and application, the latter being unfavorable with respect to the optical quality of the resulting coating layer. Suitable defoaming agents are, for example, all foaming agents commonly used in coating compositions. Specific examples include polysiloxanes, hydrophobic solids, polyethermodified siloxanes, polyether siloxane copolymers and mixtures thereof. Commercially available defoaming agents which are suitable are, for example, BYK 022 (polysiloxanes and hydrophobic solids in polyglycol, BYK Chemie), BYK 342 (polyethermodified siloxane, BYK Chemie) and TEGO^{®} Foamex 810 (polyether siloxane copolymer and fumed silica, Evonik Industry).

Suitable total amounts of the at least one defoaming agent include 0.02 to 1.5 wt.%, based in each case on the total weight of the coating composition (C1).

The term "biocide" as used herein denotes any material, whether chemical or microbial, which can control the effects of pathogens such as bacteria, fungi, viruses, etc, whether through chemical or biological means and includes preservatives, which are understood to improve residual activity. The biocide can be used to prevent mildew in the coating composition (C1), especially in parts of a dye plant are used as naturally occurring pigment(s). Suitable antibacterial agents include isothiazolons and isothiazolinones, such as methylisothiazolon, benzisothiazolon, chloro methylisothiazolon, methylisothiazolinone and mixtures thereof. Particularly preferred antibacterial agents are 2-methyl-2H-isothiazol-3-on, 1,2-benzisothiazol-3(2H)-on, 5-chloro-2-methyl-4- isothiazolin-3-one, 2-methyl-4-isothiazolin-3-one and mixtures thereof. Such biocides are commercially available as "Acitcide MSB 5050" (THOR Gmbh) and "Kathon^{™} LX-150 Biocide" (Dow).

Suitable total amounts of the at least one biocide include 0.05 to 0.3 wt.%, based in each case on the total weight of the coating composition (C1).

UV absorbers are preferably used in the coating composition (C1) the naturally occurring pigment(s) are prone to UV degradation to avoid a significant change of the color of the colored coating layer to UV irradiation. Suitable UV absorbers include those commercially available under the brand name "Tinuvin". These UV absorbers are preferably used in a total amount of 0.1 to 3 wt.%, based on the total weight of the coating composition (C1).

Suitable crosslinking catalysts, ethoxylated fatty alcohols, fatty acids, polyethermodified polyalkylsiloxanes, hydroxy-functional polyalkylsiloxanes as well as their amounts are described, for example, in published patent application WO 2020/104213 A1.

### Exemplary Embodiments of the Coating Compositions (C1) for Inventive Use:

In a first preferred embodiment, the coating composition (C1) comprises or consists of 60 to 70 wt.% of an aqueous dispersion (1), 20 to 30 wt.% of an aqueous dispersion (2), 3 to 6 wt.% of Bavarian green earth pigment having a D₅₀ particle size of 5 to 150 µm, optionally 3 to 8 wt.% of a polyether-modified polyisocyanate, 0.5 to 1.5 wt.% of a leveling agent and water, the weight percentages being based on the total weight of the coating composition.

In a second preferred embodiment, the coating composition (C1) comprises or consists of 5 to 10 wt.% of a hydroxy-functional poly(meth)acrylate, 10 to 20 wt.% of a polyester, 3 to 6 wt.% of Bavarian green earth pigment having a D₅₀ particle size of 5 to 150 µm, optionally 20 to 30 wt.% of a polyisocyanate comprising at least one isocyanurate ring, 2 to 5 wt.% of a mixture of ethoxylated fatty alcohols and fatty acids, 0.3 to 1 wt.% of a hydroxy-functional polyalkylsiloxane, optionally 0.5 to 1.5 wt.% of a leveling agent, and organic solvent, the weight percentages being based on the total weight of the coating composition.

In a third preferred embodiment, the coating composition (C1) comprises or consists of 20 to 30 wt.% of a mixture of soft and hard polyurethanes in a weight ratio of 1:8 to 1:10, 3 to 6 wt.% of Bavarian green earth pigment having a D₅₀ particle size of 5 to 150 µm, optionally 1 to 4 wt.% of a polyisocyanate comprising at least one isocyanurate ring, optionally 0.5 to 1.5 wt.% of a leveling agent and water and water, the weight percentages being based on the total weight of the coating composition.

In a fourth preferred embodiment, the coating composition (C1) comprises or consists of 60 to 70 wt.% of an aqueous dispersion (1), 20 to 30 wt.% of an aqueous dispersion (2), 3 to 6 wt.% of Russian green earth pigment having a D₅₀ particle size of 5 to 150 µm, optionally 3 to 8 wt.% of a polyether-modified polyisocyanate, 0.5 to 1.5 wt.% of a leveling agent and water, the weight percentages being based on the total weight of the coating composition.

In a fifth preferred embodiment, the coating composition (C1) comprises or consists of 5 to 10 wt.% of a hydroxy-functional poly(meth)acrylate, 10 to 20 wt.% of a polyester polyol, 3 to 6 wt.% of Russian green earth pigment having a D₅₀ particle size of 5 to 150 µm, 0.5 to 3 wt.% of leveling agent, optionally 20 to 30 wt.% of a polyisocyanate comprising at least one isocyanurate ring, 2 to 5 wt.% of a mixture of ethoxylated fatty alcohols and fatty acids, 0.3 to 1 wt.% of a hydroxy-functional polyalkylsiloxane, optionally 0.5 to 1.5 wt.% of a leveling agent, and organic solvent, the weight percentages being based on the total weight of the coating composition.

In a sixth preferred embodiment, the coating composition (C1) comprises or consists of 20 to 30 wt.% of a mixture of soft and hard polyurethanes in a weight ratio of 1:8 to 1:10, 3 to 6 wt.% of Russian green earth pigment having a D₅₀ particle size of 5 to 150 µm, optionally 1 to 4 wt.% of a polyisocyanate comprising at least one isocyanurate ring, optionally 0.5 to 1.5 wt.% of a leveling agent and water, the weight percentages being based on the total weight of the coating composition.

In a seventh preferred embodiment, the coating composition (C1) comprises or consists of 60 to 70 wt.% of an aqueous dispersion (1), 20 to 30 wt.% of an aqueous dispersion (2), 3 to 6 wt.% of curcuma pigment having a D₅₀ particle size of 5 to 150 µm, optionally 3 to 8 wt.% of a polyether-modified polyisocyanate, 0.5 to 1.5 wt.% of a leveling agent, 0.5 to 1.5 wt.% of a light stabilizer, 0.5 to 1.5 wt.% of a UV absorber, and water, the weight percentages being based on the total weight of the coating composition.

In an eighth preferred embodiment, the coating composition (C1) comprises or consists of 5 to 10 wt.% of a hydroxy-functional poly(meth)acrylate, 10 to 20 wt.% of a polyester polyol, 3 to 6 wt.% of curcuma pigment having a D₅₀ particle size of 5 to 150 µm, optionally 20 to 30 wt.% of a polyisocyanate comprising at least one isocyanurate ring, 2 to 5 wt.% of a mixture of ethoxylated fatty alcohols and fatty acids, 0.3 to 1 wt.% of a hydroxy-functional polyalkylsiloxane, optionally 0.5 to 1.5 wt.% of a leveling agent, 0.5 to 1.5 wt.% of a light stabilizer, 0.5 to 1.5 wt.% of a UV absorber and organic solvent, the weight percentages being based on the total weight of the coating composition.

In a ninth preferred embodiment, the coating composition (C1) comprises or consists of 20 to 30 wt.% of a mixture of soft and hard polyurethanes in a weight ratio of 1:8 to 1:10, 3 to 6 wt.% of curcuma pigment having a D₅₀ particle size of 5 to 150 µm, optionally 1 to 4 wt.% of a polyisocyanate comprising at least one isocyanurate ring, optionally 0.5 to 1.5 wt.% of a leveling agent, 0.5 to 1.5 wt.% of a light stabilizer, 0.5 to 1.5 wt.% of a UV absorber and water, the weight percentages being based on the total weight of the coating composition.

In a tenth preferred embodiment, the coating composition (C1) comprises or consists of 60 to 70 wt.% of an aqueous dispersion (1), 20 to 30 wt.% of an aqueous dispersion (2), 3 to 6 wt.% of henna red pigment having a D₅₀ particle size of 5 to 150 µm, optionally 3 to 8 wt.% of a polyether-modified polyisocyanate, 0.5 to 1.5 wt.% of a leveling agent, 0.5 to 1.5 wt.% of a light stabilizer, 0.5 to 1.5 wt.% of a UV absorber and water, the weight percentages being based on the total weight of the coating composition.

In an eleventh preferred embodiment, the coating composition (C1) comprises or consists of 5 to 10 wt.% of a hydroxy-functional poly(meth)acrylate, 10 to 20 wt.% of a polyester polyol, 3 to 6 wt.% of henna red pigment having a D₅₀ particle size of 5 to 150 µm, optionally 20 to 30 wt.% of a polyisocyanate comprising at least one isocyanurate ring, 2 to 5 wt.% of a mixture of ethoxylated fatty alcohols and fatty acids, 0.3 to 1 wt.% of a hydroxy-functional polyalkylsiloxane, optionally 0.5 to 1.5 wt.% of a leveling agent, 0.5 to 1.5 wt.% of a light stabilizer, 0.5 to 1.5 wt.% of a UV absorber and organic solvent, the weight percentages being based on the total weight of the coating composition.

In a twelfth preferred embodiment, the coating composition (C1) comprises or consists of 20 to 30 wt.% of a mixture of soft and hard polyurethanes in a weight ratio of 1:8 to 1:10, 3 to 6 wt.% of henna red pigment having a D₅₀ particle size of 5 to 150 µm, optionally 1 to 4 wt.% of a polyisocyanate comprising at least one isocyanurate ring, optionally 0.5 to 1.5 wt.% of a leveling agent, 0.5 to 1.5 wt.% of a light stabilizer, 0.5 to 1.5 wt.% of a UV absorber and water, the weight percentages being based on the total weight of the coating composition.

In a thirteenth preferred embodiment, the coating composition (C1) comprises or consists of 60 to 70 wt.% of an aqueous dispersion (1), 20 to 30 wt.% of an aqueous dispersion (2), 3 to 6 wt.% of kamala pigment having a D₅₀ particle size of 5 to 150 µm, optionally 3 to 8 wt.% of a polyether-modified polyisocyanate, 0.5 to 1.5 wt.% of a leveling agent, 0.5 to 1.5 wt.% of a light stabilizer, 0.5 to 1.5 wt.% of a UV absorber and water, the weight percentages being based on the total weight of the coating composition.

In an fourteenth preferred embodiment, the coating composition (C1) comprises or consists of 5 to 10 wt.% of a hydroxy-functional poly(meth)acrylate, 10 to 20 wt.% of a polyester polyol, 3 to 6 wt.% of kamala pigment having a D₅₀ particle size of 5 to 150 µm, optionally 20 to 30 wt.% of a polyisocyanate comprising at least one isocyanurate ring, 2 to 5 wt.% of a mixture of ethoxylated fatty alcohols and fatty acids, 0.3 to 1 wt.% of a hydroxy-functional polyalkylsiloxane, optionally 0.5 to 1.5 wt.% of a leveling agent, 0.5 to 1.5 wt.% of a light stabilizer, 0.5 to 1.5 wt.% of a UV absorber and organic solvent, the weight percentages being based on the total weight of the coating composition.

In a fifteenth preferred embodiment, the coating composition (C1) comprises or consists of 20 to 30 wt.% of a mixture of soft and hard polyurethanes in a weight ratio of 1:8 to 1:10, 3 to 6 wt.% of kamala pigment having a D₅₀ particle size of 5 to 150 µm, optionally 1 to 4 wt.% of a polyisocyanate comprising at least one isocyanurate ring, optionally 0.5 to 1.5 wt.% of a leveling agent, 0.5 to 1.5 wt.% of a light stabilizer, 0.5 to 1.5 wt.% of a UV absorber and water, the weight percentages being based on the total weight of the coating composition.

In a sixteenth preferred embodiment, the coating composition (C1) comprises or consists of 60 to 70 wt.% of an aqueous dispersion (1), 20 to 30 wt.% of an aqueous dispersion (2), 3 to 6 wt.% of madder roots pigment having a D₅₀ particle size of 5 to 150 µm, optionally 3 to 8 wt.% of a polyether-modified polyisocyanate, 0.5 to 1.5 wt.% of a leveling agent, 0.5 to 1.5 wt.% of light a stabilizer, 0.5 to 1.5 wt.% of a UV absorber and water, the weight percentages being based on the total weight of the coating composition.

In an seventeenth preferred embodiment, the coating composition (C1) comprises or consists of 5 to 10 wt.% of a hydroxy-functional poly(meth)acrylate, 10 to 20 wt.% of a polyester polyol, 3 to 6 wt.% of madder roots pigment having a D₅₀ particle size of 5 to 150 µm, optionally 20 to 30 wt.% of a polyisocyanate comprising at least one isocyanurate ring, 2 to 5 wt.% of a mixture of ethoxylated fatty alcohols and fatty acids, 0.3 to 1 wt.% of a hydroxy-functional polyalkylsiloxane, optionally 0.5 to 1.5 wt.% of a leveling agent, 0.5 to 1.5 wt.% of a light stabilizer, 0.5 to 1.5 wt.% of a UV absorber and organic solvent, the weight percentages being based on the total weight of the coating composition.

In an eighteenth preferred embodiment, the coating composition (C1) comprises or consists of 20 to 30 wt.% of a mixture of soft and hard polyurethanes in a weight ratio of 1:8 to 1:10, 3 to 6 wt.% of madder roots pigment having a D₅₀ particle size of 5 to 150 µm, optionally 1 to 4 wt.% of a polyisocyanate comprising at least one isocyanurate ring, optionally 0.5 to 1.5 wt.% of a leveling agent, 0.5 to 1.5 wt.% of a light stabilizer, 0.5 to 1.5 wt.% of a UV absorber and water, the weight percentages being based on the total weight of the coating composition.

In any of the afore-mentioned embodiments, the aqueous dispersion (1), the aqueous dispersion (2), the hydroxy-functional poly(meth)acrylate and the polyester polyol refer to the dispersions and resins which have been described previously in relation to suitable binders and/or the dispersing agent is copolymer comprising groups having pigment affinity and/or the leveling agent is a polyethermodified siloxane and/or the UV stabilizer is a mixture of bis(1, 2, 2, 6, 6-pentamethyl-4-piperidyl) sebacate and methyl 1, 2, 2, 6, 6- pentamethyl-4-piperidyl sebacate and/or the UV absorver is a mixture of 2-[4-[(2-Hydroxy-3-dodecyloxypropyl)oxy]-2-hydroxyphenyl]- 4,6-bis(2,4-dimethylphenyl)-1,3,5-triazine and 2-[4-[(2-Hydroxy-3-tridecyloxypropyl)oxy]-2-hydroxyphenyl]-4,6-bis(2,4-dimethylphenyl)-1,3,5-triazine .

The exemplary embodiments of the coating compositions used in the inventive methods result in high quality coatings on a wide variety of substrates, such as flexible foam materials, rigid plastic substrates, etc., having a high optical quality, in particular a sufficient hiding power and a uniform appearance, as well as good mechanical properties, such as adhesion to the substrate, flexibility, weatherability, abrasion resistance etc.. The optical quality of the coating layers achieved when using the coating composition (C1) comprising at least one naturally occurring pigment in the inventive methods is comparable to the optical quality achieved with coating compositions comprising commonly used pigments, such as pigments prepared from hydrocarbon feedstock or petroleum aromatic chemistry. The visual impression of the coating layers resulting from the inventive methods can be tuned, for example by using the naturally occurring pigment in the form of a powder having different particle sizes, a pigment paste or different amounts of the pigment(s). Coating layers containing naturally occurring pigment(s) having an inhomogeneous particle distribution with average particle sizes of at least 100 µm change their visual appearance, i.e. their color turns more intense, upon mechanical influences on the coating layer, such as rubbing.

### Properties of the Coating Compositions for Inventive Use:

The solids content of the coating composition (C1) may vary according to the requirements of the individual case. The solids content is guided primarily by the viscosity required for application, more particularly for spray application, and so may be adjusted by the skilled person on the basis of his or her general art knowledge, optionally with assistance from a few exploratory tests. The coating composition (C1) may have a solids content of 20 to 60 wt.%, preferably of 25 to 45 wt.%. The solids content (nonvolatile fraction) refers to the weight fraction of the residue remaining after evaporation under specified conditions, such as 130 °C for 60 minutes. In the present specification, the solids content is determined according to DIN EN ISO 3251:2019-09.

The coating composition (C1) preferably has a viscosity of 100 to 1,000 mPa*s, more preferably of 200 to 600 mPa*s, determined according to DIN EN ISO 3219:1994-10.

Depending on the particular binder(s) and crosslinking agent present in the composition (C1), the coating composition (C1) is configured as a one-component system or is obtainable by mixing two (two-component system) or more (multicomponent system) components. In thermochemically curable one-component systems, the components to be crosslinked, in other words binder and crosslinking agent, are present alongside one another, in other words in one component. A condition for this is that the components to be crosslinked react with one another effectively only at relatively high temperatures, of more than 100°C, for example, so as to prevent premature at least proportional thermochemical curing. Such a combination may be exemplified by hydroxy-functional polyesters and/or polyurethanes with melamine resins and/or blocked polyisocyanates as crosslinking agents.

In thermochemically curable two-component or multicomponent systems, the components to be crosslinked, in other words binders and the crosslinking agents, are present separately from one another in at least two components, which are not combined until shortly before the application. This form is selected when the components to be crosslinked react with one another effectively even at ambient temperatures or slightly elevated temperatures of, for example, 40 to 90°C. Such a combination may be exemplified by hydroxy-functional polyesters and/or polyurethanes and/or poly(meth)acrylates with free polyisocyanates as crosslinking agents.

Where the coating composition (C1) is obtainable by mixing two or more components, the binder-containing component is mixed with the crosslinker-containing component.

### Method for Producing the Coating Composition for Inventive Use:

The coating composition (C1) used in the inventive method can be produced as follows:
(i) providing at least one naturally occurring pigment or providing a pigment paste comprising at least one naturally occurring pigment and
(ii) adding the pigment or pigment paste provided in step (i) to at least one binder and at least one solvent and optionally at least one crosslinking agent and/or at least one additive.

If the naturally occurring pigment is used in powder form to prepare the coating composition (C1), the coating layers resulting from using said coating compositions have a "used look", i.e. they have a lighter color than the color obtained when using a pigment paste comprising the same naturally occurring pigment. When using the pigment paste, a comparative visual impression is obtained when compared to using pigment pastes containing pigment prepared from hydrocarbon feedstock or petroleum aromatic chemistry. This allows to tune the look of the coating layer resulting from the use of the coating composition (C1) in the inventive method by using the appropriate form of the at least one naturally occurring pigment. Moreover, the color of the produced coating layers can be tuned by the amount of respective pigment, i.e. the use of lower amounts of pigment results in a lighter color than the use of higher amounts of pigment.

The naturally occurring pigment can be provided in powder form from the appropriate plant or from naturally occurring stones, such as green sandstone, as previously described.

The pigment paste can be provided by as previously described by mixing the naturally occurring pigment in powder form with water, a dispersing agent, a defoamer, a leveling agent and optionally a pH adjustment agent, grinding the obtained mixture, and filtering the grinded mixture.

The pigment in powder form or the pigment paste provided is then added to the binder matrix comprising at least one binder, at least one solvent and optionally at least one crosslinking agent and/or at least one additive. If unblocked polyisocyanates are used as crosslinking agent, the crosslinking agent is only added shortly before application of the coating composition to the substrate to avoid undesired crosslinking before application. If blocked polyisocyanates are used, the crosslinking agent can be added to the binder matrix. The resulting mixture can be homogenized by stirring or by the use of commonly used dispersing methods.

### Coating of the invention:

The result after the end of the inventive method is a coating (B) of the invention. With preference the coating (B) consists exclusively of the colored coating (BC).

The produced coating has a high optical quality, especially a sufficient hiding power to hide the underlying substrate and a uniform color, as well as good mechanical properties, such as a high adhesion to the underlying substrate, a high flexibility, a good weathering stability and a high abrasion resistance. The high optical quality and the good mechanical stability is achieved irrespective of the substrate and the carrier of the coating composition (i.e. water or organic solvents), thus allowing to use a wide variety of different substrates as well as tailoring the coating composition to the specific needs of the process to produce the coated substrate. Additionally the produced coating can be tuned with respect to optical properties, thus allowing to achieve the look desired by the customers via use of the naturally occurring pigments in the appropriate form, i.e. as powder or as pigment paste. Finally, the coating produced when the naturally occurring pigment as powder having an inhomogeneous particle size distribution changes its appearance depending on the mechanical influence, such as abrasion, thus allowing to create desired optical effects using mechanical influence.

What has been said about the inventive method to produce a coating on a substrate applies mutatis mutandis with respect to further preferred embodiments of the inventive coating.

### Substrate of the invention:

A final subject of the invention is a substrate bearing an inventive coating.

What has been said about the inventive method to produce a coating on a substrate and about the inventive coating applies mutatis mutandis with respect to further preferred embodiments of the inventive substrate.

### Examples

The present invention will now be explained in greater detail through the use of working examples, but the present invention is in no way limited to these working examples. Moreover, the terms "parts", "%" and "ratio" in the examples denote "parts by mass", "mass %" and "mass ratio" respectively unless otherwise indicated.

### 1. Measurement methods:

### 1.1 Gel fraction:

The gel fraction, in particular of polyurethane resin fractions of corresponding aqueous dispersions, is determined gravimetrically in the context of the present invention. Here, first of all, the polymer present was isolated from a sample of an aqueous dispersion (initial mass 1.0 g) by freeze-drying. Following determination of the solidification temperature - the temperature above which the electrical resistance of the sample shows no further change when the temperature is lowered further - the fully frozen sample underwent its main drying, customarily in the drying vacuum pressure range between 5 mbar and 0.05 mbar, at a drying temperature lower by 10°C than the solidification temperature. By graduated increase in the temperature of the heated surfaces beneath the polymer to 25°C, rapid freeze-drying of the polymers was achieved; after a drying time of typically 12 hours, the amount of isolated polymer (solid fraction, determined by the freeze-drying) was constant and no longer underwent any change even on prolonged freeze-drying. Subsequent drying at a temperature of 30°C of the surface beneath the polymer, with the ambient pressure reduced to the maximum degree (typically between 0.05 and 0.03 mbar), produced optimum drying of the polymer.

The isolated polymer was subsequently sintered in a forced air oven at 130°C for one minute and thereafter extracted for 24 hours at 25°C in an excess of tetrahydrofuran (ratio of tetrahydrofuran to solid fraction = 300:1). The insoluble fraction of the isolated polymer (gel fraction) was then separated off on a suitable frit, dried in a forced air oven at 50°C for 4 hours, and subsequently reweighed.

It was further ascertained that at the sintering temperature of 130°C, with variation in the sintering times between one minute and twenty minutes, the gel fraction found for the microgel particles is independent of the sintering time. It can therefore be ruled out that crosslinking reactions subsequent to the isolation of the polymeric solid increase the gel fraction further.

Given that some of the aqueous, commercially acquired polymer dispersions used additionally include inorganic components such as silicates, and the fraction of these inorganic components is of course captured as well in the determination of the gel fraction, all of the dispersions were incinerated (800°C) and any remaining ash content was then subtracted from the gel fraction found.

### 1.2 Glass transition and melting transition:

The glass transition is determined on the basis of the glass transition temperature. The glass transition temperature in the context of the invention is determined experimentally in a method based on DIN 51005 "Thermal Analysis (TA) - Terms" and DIN 53765 "Thermal Analysis - Differential Scanning Calorimetry (DSC)". A sample of the binder is applied with a wet film thickness of 100 µm, using a doctor blade, to a glass plate, dried initially at 40°C for 1 hour and then dried at 110°C for 1 hour. For the measurement, a section of the film thus dried is removed from the glass plate and inserted into the measuring sleeve. This sleeve is then inserted into a DSC instrument. It is cooled to the start temperature, after which 1^{st} and 2^{nd} measurement runs are carried out at a heating rate of 10 K/min with inert gas flushing (N₂) of 50 ml/min, with cooling again to the start temperature between the measurement runs.

A glass transition can be seen in the DSC diagram as a section of the measurement curve that in terms of amount possesses a slope much greater in relation to the baselines before and after the transition. The slope greater in terms of amount is known to be attributable to the higher quantity of energy needed in the region of the phase transition in order to increase the temperature. A measurement curve section of this kind then, of course, possesses a point of inflection in the region with the slope that is greater in terms of amount. For the purposes of the present invention, the glass transition temperature of a glass transition is taken to be the temperature of this point of inflection in the 2^{nd} measurement run.

The temperature at which the polyurethane resin fraction has its glass transition is defined as follows in the context of the present invention: it is the temperature at the point of inflection of the curve section assignable to the glass transition (glass transition temperature). It is possible for there to be a number of curve sections present which can be assigned to glass transitions. The system in question in that case has a number of glass transitions and glass transition temperatures. In such an event, the temperature at which the polyurethane resin fraction has its glass transition is the temperature at the point of inflection of the curve section in the highest temperature range. In such an event, indeed, it is only after the last glass transition that there is no longer any glasslike structure at all in the corresponding polyurethane resin fraction. The expression "its glass transition" can therefore be equated with the wording "its complete glass transition" or "its glass transition with the highest temperature".

The melting transition is likewise determined from the DSC diagram measured as described above. A melting transition is seen as a region which deviates from the baseline in the DSC diagram. Within this region, in fact, the system must be supplied with a greater quantity of energy, owing to the phase conversion of the crystallites, in order to bring about an increase in temperature. These regions, as is known, are seen as peaks with different widths.

The temperature at which the polyurethane resin fraction has its melting transition is defined as follows in the context of the present invention: it is the temperature at the extreme point of the peak assignable to the melting transition. Where there are a number of peaks present to which melting transitions are assignable, the extreme point in question is that of the peak in the highest temperature range. In such an event, indeed, the system has a number of melting transitions. Accordingly, there is no longer any crystalline structure present in the corresponding polyurethane resin fraction only after the last melting transition. The expression "its melting transition" can therefore be equated with the wording "its complete melting transition" or "its melting transition with the highest temperature".

### 1.3 Viscosity

The viscosity was determined 1 day after the preparation of the respective base component according to DIN EN ISO 3219:1994-10.

### 2. Methods of determination:

### 2.1 Migration test

The migration test is performed according to DIN EN ISO 15701:2015-07. In this test method, the side of the sample coated with the respective coating layer is placed in contact with a standardized PVC material described in the official standard under a defined pressure for 16 hours at 50 °C ± 2 °C. After a set cooling period of 2 h, bleeding of the contact materials is assessed by comparison with a greyscale (grade 1 to 5, grade 1 = high migration, grade 5 = no migration). This is accomplished by comparison of the contrast values between that part of the PVC material which was in contact with the coating layer and a part of the same PVC material which did not come into contact with the coating layer.

### 2.2 Fatigue bending test

The coated substrate was bend (60° bend) centrally with the coated side outward for a minimum of 50.000 cycles. The coated substrates were subsequently visually inspected for cracks. If all occurring cracks were < 1 mm, the coated substrate was rated as "pass", otherwise the coated substrate was rated as "fail".

### 2.3 Light fastness

The light fastness was determined by partially covering the coating layer of the coated substrates and exposing the partially covered coating layer to outdoor conditions in an Atlas SUNTEST XLS+ having an uncoated quartz filter for 6 hours. Afterwards, the contrast between the covered and non-covered part of the coated substrate is compared using a greyscale (1 to 5, grade 1 = huge contrast, grade 5 = no contrast).

### 2.4 Rubbing fastness

The rubbing fastness was tested by rubbing sandpaper 280 for 25 times (back and forth) with a defined pressure of 1 kg over the coated substrates. The coated substrates were subsequently inspected for visual defects. If no visual defects were present in the coating layer the coated substrate was rated as "pass", otherwise the coated substrate was rated as "fail".

### 2.5 Hiding power

The hiding power was determined visually by inspection of the coated substrate. If the underlying color of the substrate is not visible, the coated substrate is rated as "pass", otherwise the coated substrate is rated as "fail"

### 2.6 Uniformity of color of coating layer

The uniformity of the color of the coating layer was determined visually by inspection of the coated substrate. If coating layer has a uniform color (i.e. no visual color differences or defects in the coating layer), the coated substrate is rated as "pass", otherwise the coated substrate is rated as "fail"

### 3. Preparation of coating compositions

### 3.1 Base components

The base components of various inventive coating compositions AC1-1 to AC1-6 were produced by dispersing the respective naturally occurring pigment powder in a binder matrix obtained by mixing the aqueous polyurethane dispersions with a leveling agent and - where appropriate - a light stabilizer and UV absorber in the amounts stated in Table 2a for 10 to 30 minutes. Base components containing henna red pigment and madder root pigment were filtered using a 190 mesh sieve after the dispersion and prior to adding DI water (if appropriate).

**Table 2a: Ingredients used to prepare base components**

| | AC1-1 | AC1-2 | AC1-3 | AC1-4 | AC1-5 | AC1-6 |
|---|---|---|---|---|---|---|
| Aqueous dispersion (1) ¹⁾ | 67.7 | 70.4 | 70.4 | 70.4 | 70.4 | 70.4 |
| Frist aqueous dispersion (2) ²⁾ | 22.2 | 23.0 | 23.0 | 23.0 | 23.0 | 23.0 |
| Second aqueous dispersion (3) ³⁾ | 4.1 | 4.27 | 4.27 | 4.27 | 4.27 | 4.27 |
| Curcuma pigment ⁴⁾ | 5.0 | - | - | - | - | - |
| Henna red pigment ⁵⁾ | - | 5.0 | - | - | - | - |
| Kamala pigment ⁶⁾ | - | - | 5.0 | - | - | - |
| Madder root pigment ⁷⁾ | - | - | - | 5.0 | - | - |
| Bavarian green earth pigment ⁸⁾ | - | - | - | - | 5.0 | - |
| Russian green earth pigment ⁹⁾ | - | - | - | - | - | 5.0 |
| Leveling agent ¹⁰⁾ | 1.0 | 1.0 | 1.0 | 1.0 | 1.0 | 1.0 |
| Light stabilizer ¹¹⁾ | 1.0 | 1.0 | 1.0 | 1.0 | - | - |
| UV absorber ¹²⁾ | 1.0 | 1.0 | 1.0 | 1.0 | - | - |
| Distilled water added during dispersion | 10.0 | 20.0 | 10.0 | - | - | - |
| Distilled water added after dispersion | 8.0 | - | - | 23.5 | - | - |
| Viscosity [mPas] | 347 | 381 | 341 | 359 | 400 | 389 |

| | | | | | | |
|---|---|---|---|---|---|---|
| ¹⁾ commercial dispersion (1) comprises a polyurethane resin fraction with a gel fraction of 61.3%. The polyurethane resin fraction has its glass transition at a temperature of - 47°C and its melting transition at a temperature of 50°C. The polyurethane resin fraction comprises particles having a particle size of 1 to 100 micrometers. The solids content of the dispersion is 26.5% including 1.8% of inorganic components (silicates) (determined via incineration, 800°C), ²⁾ first commercial dispersion (2) comprises a polyurethane resin fraction having a gel fraction of 91%. The average particle size (volume average) is 244 nanometers. The polyurethane resin fractions have their glass transition at -48°C. Melting transitions at below 100°C are not observed. The solids contents of the dispersion is 39.0%., ³⁾ second commercial dispersion (2) comprises a polyurethane resin fraction having a gel fraction of 95%. The average particle size (volume average) is 56 nanometers. The polyurethane resin fractions have their glass transition at -60°C. Melting transitions at below 100°C are not observed. The solids contents of the dispersions are 37.0%, ⁴⁾ supplied by Kremer Pigmente GmbH & Co. KG, ⁵⁾ supplied by Kremer Pigmente GmbH & Co. KG, ⁶⁾ (supplied by Kremer Pigmente GmbH & Co. KG, ⁷⁾ roughly grinded madder root supplied by Kremer Pigmente GmbH & Co. KG, ⁸⁾ supplied by Kremer Pigmente GmbH & Co. KG, ⁹⁾ supplied by Kremer Pigmente GmbH & Co. KG, ¹⁰⁾ BYK 346 (supplied by BYK Chemie GmbH), ¹¹⁾ Tinuvin 292 (supplied by BASF SE), ¹²⁾ Tinuvin 400 (supplied by BASF SE), | | | | | | |

### 3.2 Hardener component

**Table 2b: Hardener component**

| | AC1-1 | AC1-2 | AC1-3 | AC1-4 | AC1-5 | AC1-6 |
|---|---|---|---|---|---|---|
| Astacin^{®} Härter Cl ¹⁾ | 8.0 | 8.0 | 8.0 | 8.0 | 8.0 | 8.0 |

| | | | | | | |
|---|---|---|---|---|---|---|
| ¹⁾ polyether-modified HDI-Isocyanurate, NCO content = 11%, solids content = 70 % (supplied by BASF SE) | | | | | | |

### 3.3 Preparation of aqueous coating compositions AC1-1 to AC1-6

The respective aqueous coating composition AC1-1 to A1C-6 was obtained by mixing the respective base component homogeneously with the hardener component in a ratio of 100:8 immediately before application of the coating composition to the substrate as described hereinafter.

### 4. Production of coated substrates

### 4.1 Substrate

Polyurethane bead foam sheets with a thickness of 1 cm were prepared by expanding and fusing corresponding polyurethane pellets in corresponding molds by means of steam.

### 4.2 Coating of substrates

The respective aqueous coating composition AC1-1 to A1C-6 prepared according to point 3.3 was each applied directly to the substrate prepared in point 4.1 in a one-coat system (pneumatic manual coating) and dried for 4 to 5 minutes at 23°C. The dried coating compositions are cured in a forced air oven at 80°C for 20 minutes. The film thicknesses (cured) was in each case 20-25 micrometers.

The following coated substrates were produced (Table 3):

**Table 3: Produced coated substrates**

| | Substrate | | | | | |
|---|---|---|---|---|---|---|
| | S1 | S2 | S3 | S4 | S5 | S6 |
| Coating composition | AC1-1 | AC1-2 | AC1-3 | AC1-4 | AC1-5 | AC1-6 |

### 5. Results

### 5.1 Migration test

The migration tendency of substances being present in the colored coating layers on substrates S1 to S6 is determined as described in point 2.1 above. The results are shown in Table 4.

**Table 4: Results migration test**

| | Substrate | | | | | |
|---|---|---|---|---|---|---|
| | S1 | S2 | S3 | S4 | S5 | S6 |
| Rating migration test | 4-5 | 4-5 | 3 | 4 | 4-5 | 4-5 |

Each coating layer produced from aqueous coating compositions AC1-1 to AC1-6 containing sustainable pigments (i.e. naturally occurring pigments selected from curcuma pigment, henna red pigment, kamala pigment, madder roots pigment, Bavarian green earth pigment or Russian green earth pigment) directly on the expanded and fused TPU bead substrate does not show any or only a slight migration to a substrate being in contact with the respective coating layer, thus avoiding an excessive transfer of substances from the coating layer to substrates being in contact with said coating layer.

### 5.2 Fatigue bending test

The fatigue bending of coated substrates S1 to S6 is determined as described in point 2.2 above. The results are shown in Table 5.

**Table 5: Results fatigue bending test**

| | Substrate | | | | | |
|---|---|---|---|---|---|---|
| | S1 | S2 | S3 | S4 | S5 | S6 |
| Rating fatigue bending test | Pass | Pass | Pass | Pass | Pass | Pass |

Each coating layer produced from aqueous coating compositions AC1-1 to AC1-6 containing sustainable pigments (i.e. naturally occurring pigments selected from curcuma pigment, henna red pigment, kamala pigment, madder roots pigment, Bavarian green earth pigment or Russian green earth pigment) on the expanded and fused TPU bead substrate shows a sufficient flexibility to prevent the formation of significant cracks upon bending of the coated substrates S1 to S6, thus rendering the aqueous coating compositions AC1-1 to AC1-6 especially suitable for the coating of flexible substrates which are bend numerous times during their life-time, such as flexible foam materials used as midsoles in the footwear industry.

### 5.3 Light fastness

The light fastness against sunlight of coated substrates S1 to S6 is determined as described in point 2.3 above. The results are shown in Table 6.

**Table 6: Results light fastness test**

| | Substrate | | | | | |
|---|---|---|---|---|---|---|
| | S1 | S2 | S3 | S4 | S5 | S6 |
| Rating light fastness test | 1-2 | 1-2 | 4 | 3-4 | 5 | 5 |

Coating layers produced from aqueous coating compositions AC1-3 to AC1-6 containing sustainable pigments (i.e. naturally occurring pigments selected from kamala pigment, madder roots pigment, Bavarian green earth pigment or Russian green earth pigment) on the expanded and fused TPU bead substrate show a sufficient light fastness, i.e. do not show a significant color change upon irradiation of the coated substrate with sunlight. Thus, the inventive aqueous coating compositions AC1-3 to AC1-6 result in colored coating layers having a high weathering stability and are thus suitable for substrates coming into contact with sunlight, such as clothing worn outside. A color change of the resulting coating layer was observed when using curcuma pigment and henna red pigment in the aqueous coating compositions. The color change observed for coating layers produced from the aqueous coating compositions AC1-1 and AC1-2 can be avoided by using a small amount of further pigments in said coating compositions.

### 5.4 Rubbing fastness

The rubbing fastness of coated substrates S1 to S6 is determined as described in point 2.4 above. The results are shown in Table 7.

**Table 7: Results rubbing fastness test**

| | Substrate | | | | | |
|---|---|---|---|---|---|---|
| | S1 | S2 | S3 | S4 | S5 | S6 |
| Rating rubbing fastness | Pass | Pass | Pass | Pass | Pass | Pass |

Each coating layer produced from aqueous coating compositions AC1-1 to AC1-6 containing sustainable pigments (i.e. naturally occurring pigments selected from curcuma pigment, henna red pigment, kamala pigment, madder roots pigment, Bavarian green earth pigment or Russian green earth pigment) on the expanded and fused TPU bead substrate shows a sufficient rubbing fastness, i.e. is not damaged by rubbing on the coating layer with sandpaper. Thus, the use of the aqueous coating compositions in the inventive method result in colored coating layers having a high abrasion resistance and are thus especially suitable for producing coated substrates encountering abrasion during their use, such as footwear.

### 5.5 Hiding power

The hiding power of the coating layer present on substrates S1 to S6 is determined as described in point 2.5 above. The results are shown in Table 8.

**Table 8: Results hiding power**

| | Substrate | | | | | |
|---|---|---|---|---|---|---|
| | S1 | S2 | S3 | S4 | S5 | S6 |
| Rating hiding power | Pass | Pass | Pass | Pass | Pass | Pass |

Each coating layer produced from aqueous coating compositions AC1-1 to AC1-3 containing sustainable pigments (i.e. naturally occurring pigments selected from curcuma pigment, henna red pigment, kamala pigment, madder roots pigment, Bavarian green earth pigment or Russian green earth pigment) on the expanded and fused TPU bead substrate shows a high hiding power. Thus, the use of the naturally occurring pigments provides a sufficient hiding power such that the color of the underlying substrate is no longer visible through the colored coating layer.

### 5.6 Uniformity of color of coating layer

The uniformity of the color of the coating layer present on substrates S1 to S6 is determined as described in point 2.6 above. The results are shown in Table 9.

**Table 9: Results uniformity of the color of the coating layer**

| | Substrate | | | | | |
|---|---|---|---|---|---|---|
| | S1 | S2 | S3 | S4 | S5 | S6 |
| Rating color uniformity | Pass | Pass | Pass | Pass | Pass | Pass |

Each coating layer produced from aqueous coating compositions AC1-1 to AC1-6 containing sustainable pigments (i.e. naturally occurring pigments selected from curcuma pigment, henna red pigment, kamala pigment, madder roots pigment, Bavarian green earth pigment or Russian green earth pigment) on the expanded and fused TPU bead substrate shows a high color uniformity, i.e. no color differences as well as no visual defects were observed. Thus, the use of the coating compositions in the inventive method allow to produce coating layers having a high optical quality when using naturally occurring pigments as coloring agents.

### 6. Discussion of the results

The examples demonstrate that the use of a coating composition containing naturally occurring pigments in a post-coating method results in colored coating layers having excellent visual properties, i.e. a sufficient hiding power and a good color uniformity, as well as excellent mechanical properties, i.e. a high weathering stability, abrasion resistance, flexibility and adhesion. Moreover, the use of naturally occurring pigments does not result in significant migration of coloring material or other substances. The inventive methods thus allow to color substrates, especially flexible foam substrates used in the footwear industry, in an ecologically friendly way by using coating compositions comprising naturally occurring pigments.

## Claims

1. A method for producing a coating (B) on a substrate (S), comprising a step of producing a colored coating (BC) on the substrate (S) by
(i) applying a coating composition (C1), in particular directly, to at least part of a surface of the substrate (S), wherein the coating composition (C1) comprises at least one binder, at least one naturally occurring pigment having a D₅₀ particle size of 5 to 150 µm determined according to DIN EN ISO 1524:2020-11, and at least one solvent.
(ii) optionally drying the applied coating composition (C1) to form a coating film, and
(iii) curing the applied coating composition (C1) or the formed coating film,
wherein the substrate is selected from plastics substrates, wood, synthetic textiles, synthetic leather goods, filaments made of polymeric materials, and foams.

2. The method according to any one of the preceding claims, wherein the foam substrate is a flexible substrate, more preferably a thermoplastic polyurethane bead foam substrate.

3. The method according to any one of the preceding claims, wherein the applied coating composition (C1) is dried at a temperature of 15 to 60°C, preferably of 20 to 30°C, for a duration of 1 to 30 minutes, preferably of 3 to 20 minutes.

4. The method according to any one of the preceding claims, wherein the coating composition (C1) is cured at a temperature of 40 and 120°C, preferably 60 to 100°C, for a duration of 10 to 60 minutes, preferably 15 to 35 minutes.

5. A method for producing a coating (B) on a substrate (S), comprising
(A) applying a coating composition (C1) to a structured or unstructured matrix or mold, wherein the coating composition (C1) comprises at least one binder, at least one naturally occurring pigment having a D₅₀ particle size of 5 to 150 microns, determined according to DIN EN ISO 1524:2020-1, and at least one solvent
(B-1) curing the applied coating composition (C1), forming a bonding layer on the cured coating composition (C1) not being in contact with the matrix or mold and applying the bonding layer not being in contact with the cured coating composition (C1) onto at least part of a surface of the substrate, or
(B-2) drying the applied coating composition (C1), applying the dried coating composition (C1) not being in contact with the matrix or mold onto a substrate and curing the dried coating composition (C1), and
(C) removing the structured or unstructured matrix or mold from the coated substrate.

6. A method for producing a coating (B) on a substrate (S), comprising
(a) applying a coating composition (C1) to at least one inner surface of a mold, wherein the coating composition (C1) comprises at least one binder, at least one naturally occurring pigment having a D₅₀ particle size of 5 to 150 microns, determined according to DIN EN ISO 1524:2020-11, and at least one solvent
(b) optionally drying the applied coating composition (C1),
(c) applying a composition (C2) forming the substrate (S) into the mold,
(d) forming the substrate (S) while simultaneously curing the coating composition (C1), and
(e) removing the coated substrate from the mold.

7. The method according to any one of the preceding claims, wherein no further coating other than the colored coating is produced on the substrate.

8. The method according to any one of the preceding claims, wherein the at least one naturally occurring pigment is selected from curcuma pigment, henna pigment, kamala pigment, madder root pigment, green earth pigments and mixtures thereof.

9. The method according to claim 8, wherein the henna pigment is a henna red pigment.

10. The method according to claim 8 or 9, wherein the green earth pigment is selected from Bavarian green earth pigment or Russian green earth pigment.

11. The method according to any one of the preceding claims, wherein the at least one naturally occurring pigment has a D₅₀ particle size of 5 to 35 µm, more preferably of 10 to 30 µm, very preferably of 15 to 25 µm.

12. The method according to any one of the preceding claims, wherein the at least one naturally occurring pigment is present in a total amount of 0.1 to 15 wt.%, preferably of 0.5 to 12 wt.%, more preferably of 1 to 10 wt.%, very preferably of 3 to 6 wt.%, based in each case on the total weight of the coating composition.

13. The method according to any one of the preceding claims, wherein the coating composition (C1) comprises - apart from the at least one naturally occurring pigment- 0 wt.%, based on the total weight of the coating composition (C1), of further pigments and/or fillers and/or dyes.

14. A coating produced by the method as claimed in any of claims 1 to 13.

15. A substrate bearing a coating as claimed in claim 14.

## Patentansprüche

1. Verfahren zur Herstellung einer Beschichtung (B) auf einem Substrat (S), das einen Schritt des Herstellens einer farbigen Beschichtung (BC) auf dem Substrat (S) umfasst durch
(i) das Auftragen einer Beschichtungszusammensetzung (C1) insbesondere direkt auf mindestens einen Teil einer Fläche des Substrats (S), wobei die Beschichtungszusammensetzung (C1) mindestens ein Bindemittel, mindestens ein natürlich vorkommendes Pigment mit einer gemäß DIN EN ISO 1524:2020-11 bestimmten D₅₀-Partikelgröße von 5 bis 150 µm und mindestens ein Lösungsmittel umfasst,
(ii) gegebenenfalls das Trocknen der aufgetragenen Beschichtungszusammensetzung (C1), wodurch ein Beschichtungsfilm gebildet wird, und
(iii) das Härten der aufgetragenen Beschichtungszusammensetzung (C1) oder des gebildeten Beschichtungsfilms,
wobei das Substrat aus Kunststoffsubstraten, Holz, synthetischen Textilien, synthetischen Lederwaren, Filamenten aus polymeren Materialien und Schaumstoffen ausgewählt ist.

2. Verfahren nach einem der vorhergehenden Ansprüche, wobei es sich beim Schaumstoffsubstrat um ein flexibles Substrat, stärker bevorzugt ein Schaumstoffsubstrat aus thermoplastischen Polyurethan-Kügelchen, handelt.

3. Verfahren nach einem der vorhergehenden Ansprüche, wobei die aufgetragene Beschichtungszusammensetzung (C1) bei einer Temperatur von 15 bis 60 °C, vorzugsweise 20 bis 30 °C, für eine Dauer von 1 bis 30 Minuten, vorzugsweise 3 bis 20 Minuten, getrocknet wird.

4. Verfahren nach einem der vorhergehenden Ansprüche, wobei die Beschichtungszusammensetzung (C1) bei einer Temperatur von 40 und 120 °C, vorzugsweise 60 bis 100 °C, für eine Dauer von 10 bis 60 Minuten, vorzugsweise 15 bis 35 Minuten, gehärtet wird.

5. Verfahren zur Herstellung einer Beschichtung (B) auf einem Substrat (S), das Folgendes umfasst:
(A) das Auftragen einer Beschichtungszusammensetzung (C1)auf eine strukturierte oder unstrukturierte Matrix oder ein strukturiertes oder unstrukturiertes Formwerkzeug, wobei die Beschichtungszusammensetzung (C1) mindestens ein Bindemittel, mindestens ein natürlich vorkommendes Pigment mit einer gemäß DIN EN ISO 1524:2020-1 bestimmten D₅₀-Partikelgröße von 5 bis 150 Mikrometern und mindestens ein Lösungsmittel umfasst,
(B-1) das Härten der aufgetragenen Beschichtungszusammensetzung (C1), wodurch eine Haftschicht auf der gehärteten Beschichtungszusammensetzung (C1) gebildet wird, die sich nicht in Kontakt mit der Matrix oder dem Formwerkzeug befindet, und das Auftragen der sich nicht in Kontakt mit der Matrix oder dem Formwerkzeug befindlichen Haftschicht auf mindestens einen Teil einer Fläche des Substrats, oder
(B-2) das Trocknen der aufgetragenen Beschichtungszusammensetzung (C1), das Auftragen der sich nicht in Kontakt mit der Matrix oder dem Formwerkzeug befindlichen getrockneten Beschichtungszusammensetzung (C1) auf ein Substrat und das Härten der getrockneten Beschichtungszusammensetzung (C1) und
(C) das Entfernen der strukturierten oder unstrukturierten Matrix oder des strukturierten oder unstrukturierten Formwerkzeugs vom beschichteten Substrat.

6. Verfahren zur Herstellung einer Beschichtung (B) auf einem Substrat (S), das Folgendes umfasst:
(a) das Auftragen einer Beschichtungszusammensetzung (C1)auf mindestens eine Innenfläche eines Formwerkzeugs, wobei die Beschichtungszusammensetzung (C1) mindestens ein Bindemittel, mindestens ein natürlich vorkommendes Pigment mit einer gemäß DIN EN ISO 1524:2020-11 bestimmten D₅₀-Partikelgröße von 5 bis 150 Mikrometern und mindestens ein Lösungsmittel umfasst,
(b) gegebenenfalls das Trocknen der aufgetragenen Beschichtungszusammensetzung (C1),
(c) das Einbringen einer das Substrat (S) bildenden Zusammensetzung (C2) in das Formwerkzeug,
(d) das Formen des Substrats (S), wobei die Beschichtungszusammensetzung (C1) gleichzeitig gehärtet wird, und
(e) das Entfernen des beschichteten Substrats aus dem Formwerkzeug.

7. Verfahren nach einem der vorhergehenden Ansprüche, wobei auf dem Substrat keine weitere Beschichtung als die farbige Beschichtung hergestellt wird.

8. Verfahren nach einem der vorhergehenden Ansprüche, wobei das mindestens eine natürlich vorkommende Pigment aus einem Curcuma-Pigment, Henna-Pigment, Kamala-Pigment, Krappwurzel-Pigment, Grünerde-Pigmenten und Mischungen davon ausgewählt ist.

9. Verfahren nach Anspruch 8, wobei es sich beim Henna-Pigment um ein Henna-Rotpigment handelt.

10. Verfahren nach Anspruch 8 oder 9, wobei das Grünerde-Pigment aus Bayerischem Grünerde-Pigment oder Russischem Grünerde-Pigment ausgewählt ist.

11. Verfahren nach einem der vorhergehenden Ansprüche, wobei das mindestens eine natürlich vorkommende Pigment eine D₅₀-Partikelgröße von 5 bis 35 pm, stärker bevorzugt 10 bis 30 pm, ganz bevorzugt 15 bis 25 pm, aufweist.

12. Verfahren nach einem der vorhergehenden Ansprüche, wobei das mindestens eine natürlich vorkommende Pigment in einer Gesamtmenge von 0,1 bis 15 Gew.-%, vorzugsweise 0,5 bis 12 Gew.-%, stärker bevorzugt 1 bis 10 Gew.-%, ganz bevorzugt 3 bis 6 Gew.-%, in jedem Fall bezogen auf das Gesamtgewicht der Beschichtungszusammensetzung, vorhanden ist.

13. Verfahren nach einem der vorhergehenden Ansprüche, wobei die Beschichtungszusammensetzung (C1) abgesehen von dem mindestens einen natürlich vorkommenden Pigment 0 Gew.-%, bezogen auf das Gesamtgewicht der Beschichtungszusammensetzung (C1), weitere Pigmente und/oder Füllstoffe und/oder Farbstoffe umfasst.

14. Beschichtung, hergestellt durch das Verfahren nach einem der Ansprüche 1 bis 13.

15. Substrat, das eine Beschichtung nach Anspruch 14 trägt.

## Revendications

1. Procédé pour la production d'un revêtement (B) sur un substrat (S), comprenant une étape de production d'un revêtement coloré (BC) sur le substrat (S) par
(i) application d'une composition de revêtement (C1), en particulier directement, sur au moins une partie d'une surface du substrat (S), dans lequel la composition de revêtement (C1) comprend au moins un liant, au moins un pigment d'origine naturelle ayant une granulométrie D₅₀ de 5 à 150 um déterminée selon la norme DIN EN ISO 1524:2020-11, et au moins un solvant,
(ii) éventuellement séchage de la composition de revêtement appliquée (C1) pour former un film de revêtement, et
(iii) durcissement de la composition de revêtement appliquée (C1) ou du film de revêtement formé,
dans lequel le substrat est sélectionné parmi les substrats en plastique, le bois, les textiles synthétiques, les produits en cuir synthétique, les filaments composés de matériaux polymériques et les mousses.

2. Procédé selon l'une quelconque des revendications précédentes, dans lequel le substrat en mousse est un substrat flexible, de préférence un substrat en mousse de perles de polyuréthane thermoplastique.

3. Procédé selon l'une quelconque des revendications précédentes, dans lequel la composition de revêtement appliquée (C1) est séchée à une température de 15 à 60 °C, de préférence de 20 à 30 °C, pendant une durée de 1 à 30 minutes, de préférence de 3 à 20 minutes.

4. Procédé selon l'une quelconque des revendications précédentes, dans lequel la composition de revêtement (C1) est durcie à une température de 40 et 120 °C, de préférence 60 à 100 °C, pendant une durée de 10 à 60 minutes, de préférence 15 à 35 minutes.

5. Procédé pour la production d'un revêtement (B) sur un substrat (S), comprenant
(A) l'application d'une composition de revêtement (C1) sur une matrice ou un moule structuré(e) ou non structuré(e), dans lequel la composition de revêtement (C1) comprend au moins un liant, au moins un pigment d'origine naturelle ayant une granulométrie D₅₀ de 5 à 150 microns, déterminée selon la norme DIN EN ISO 1524:2020-1, et au moins un solvant,
(B-1) le durcissement de la composition de revêtement appliquée (C1), formant une couche de liaison sur la composition de revêtement durcie (C1) qui n'est pas en contact avec la matrice ou le moule et l'application de la couche de liaison n'étant pas en contact avec la composition de revêtement durcie (C1) sur au moins une partie d'une surface du substrat, ou
(B-2) le séchage de la composition de revêtement appliquée (C1), l'application de la composition de revêtement séchée (C1) n'étant pas en contact avec la matrice ou le moule sur un substrat et le durcissement de la composition de revêtement séchée (C1), et
(C) l'élimination de la matrice ou du moule structuré(e) ou non structuré(e) du substrat revêtu.

6. Procédé pour la production d'un revêtement (B) sur un substrat (S), comprenant
(A) l'application d'une composition de revêtement (C1) sur au moins une surface intérieure d'un moule, dans lequel la composition de revêtement (C1) comprend au moins un liant, au moins un pigment d'origine naturelle ayant une granulométrie D₅₀ de 5 à 150 microns, déterminée selon la norme DIN EN ISO 1524:2020-11, et au moins un solvant,
(b) éventuellement le séchage de la composition de revêtement appliquée (C1),
(c) l'application d'une composition (C2) formant le substrat (S) dans le moule,
(d) la formation du substrat (S) tout en durcissant simultanément la composition de revêtement (C1), et
(e) l'élimination du substrat revêtu du moule.

7. Procédé selon l'une quelconque des revendications précédentes, dans lequel aucun autre revêtement autre que le revêtement coloré n'est produit sur le substrat.

8. Procédé selon l'une quelconque des revendications précédentes, dans lequel l'au moins un pigment d'origine naturelle est sélectionné parmi un pigment de curcuma, un pigment de henné, un pigment de kamala, un pigment de racine de garance, des pigments de terre verte et des mélanges correspondants.

9. Procédé selon la revendication 8, dans lequel le pigment de henné est un pigment rouge de henné.

10. Procédé selon la revendication 8 ou 9, dans lequel le pigment de terre verte est sélectionné parmi un pigment de terre verte bavaroise ou un pigment de terre verte russe.

11. Procédé selon l'une quelconque des revendications précédentes, dans lequel l'au moins un pigment d'origine naturelle a une granulométrie D₅₀ de 5 à 35 um, plus préférablement de 10 à 30 um, très préférablement de 15 à 25 µm.

12. Procédé selon l'une quelconque des revendications précédentes, dans lequel l'au moins un pigment d'origine naturelle est présent en une quantité totale de 0,1 à 15 % en poids, de préférence de 0,5 à 12 % en poids, plus préférablement de 1 à 10 % en poids, très préférablement de 3 à 6 % en poids, sur la base en chaque cas du poids total de la composition de revêtement.

13. Procédé selon l'une quelconque des revendications précédentes, dans lequel la composition de revêtement (C1) comprend - à l'exception de l'au moins un pigment d'origine naturelle - 0 % en poids, sur la base du poids total de la composition de revêtement (C1), d'autres pigments et/ou charges et/ou colorants.

14. Revêtement produit par le procédé selon l'une quelconque des revendications 1 à 13.

15. Substrat portant un revêtement selon la revendication 14.
